# EUROPEAN PATENT SPECIFICATION

(11) **EP 4 145 947 B1**
(45) Date of publication and mention of the grant of the patent: **05.08.2026**
(21) Application number: 21812460.0
(22) Date of filing: 21.05.2021
(51) Int. Cl.: H04W 36/28, H04W 28/086, H04W 40/24, H04W 48/20, H04W 84/12

(54) **MULTI-LINK TENTATIVE ASSOCIATION METHOD AND RELATED APPARATUS**
PROVISORISCHES ASSOZIATIONSVERFAHREN MIT MEHREREN VERBINDUNGEN UND ZUGEHÖRIGE VORRICHTUNG
PROCÉDÉ D'ASSOCIATION PROVISOIRE À LIAISONS MULTIPLES ET APPAREIL ASSOCIÉ

(30) Priority: 27.05.2020 CN 202010463544; 16.06.2020 CN 202010550151
(43) Date of publication of application: 08.03.2023
(60) Divisional application: 26187042.2
(73) Proprietor: Huawei Technologies Co., Ltd., Shenzhen, Guangdong 518129 (CN)
(72) Inventor: HUANG, Guogang, Shenzhen, Guangdong 518129 (CN); GUO, Yuchen, Shenzhen, Guangdong 518129 (CN); LI, Yunbo, Shenzhen, Guangdong 518129 (CN); GAN, Ming, Shenzhen, Guangdong 518129 (CN); YU, Jian, Shenzhen, Guangdong 518129 (CN)
(74) Representative: Goddar, Heinz J.
(86) International application number: PCT/CN2021/095343
(87) International publication number: WO 2021/238823

(56) References cited:
- WO-A1-2020/040589
- WO-A1-2020/040589
- CN-A- 110 536 482
- US-A1- 2019 158 413
- US-A1- 2019 335 454
- US-A1- 2019 335 454
- US-A1- 2020 037 288
- JANG INSUN ET AL: "Indication of Multi-link Information: Follow-up", IEEE 802.11-20/0741R3, 1 May 2020 (2020-05-01), XP055951456, Retrieved from the Internet <URL:https://mentor.ieee.org/802.11/dcn/20/11-20-0741-03-00be-indication-of-multi-link-information-follow-up.pptx> [retrieved on 20220815]
- KHOROV EVGENY ET AL: "Current Status and Directions of IEEE 802.11be, the Future Wi-Fi 7", IEEE ACCESS, IEEE, USA, vol. 8, 8 May 2020 (2020-05-08), pages 88664 - 88688, XP011789411, DOI: 10.1109/ACCESS.2020.2993448

## Description

### TECHNICAL FIELD

This application relates to the field of wireless communication technologies, and in particular, to a multi-link tentative association method and a related apparatus.

### BACKGROUND

Wireless local area network (wireless local area network, WLAN) roaming or Wi-Fi roaming refers to a process in which a wireless terminal or a station (station, STA) moves from an access point (access point, AP) to another AP. In other words, the wireless terminal or the STA moves from a basic service set (basic service set, BSS) to another BSS. In a WLAN roaming or Wi-Fi roaming process, the STA may move freely in a Wi-Fi network belonging to a same extended service set (extended service set, ESS), for example, switches from one BSS to another BSS in the same extended service set, ESS. In addition, a user identifier (internet protocol (internet protocol, IP) address) does not change, in other words, an IP address obtained by a client at an initial stage of connecting to the network does not change in the entire roaming process, so that a service is not interrupted (a service of the client is not interrupted).

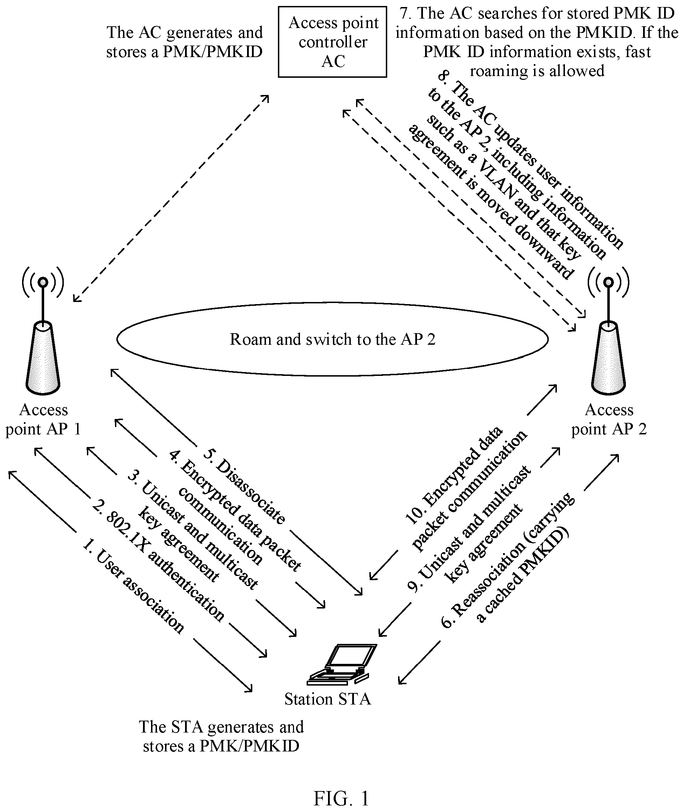

When the STA roams from one AP to another AP, the STA first disconnects from the original AP. Before a connection to the new AP is set up, service data transmission cannot be performed between the AP and the STA. Therefore, to reduce an interruption time of data transmission in the roaming process, in other words, to reduce a roaming delay (the roaming delay refers to a time period from a time when the STA is disconnected from the original AP to a time when the STA can transmit data to the new AP), a pairwise master key (pairwise master key, PMK) may be cached. FIG. 1 is a schematic diagram of implementing fast roaming of a STA by using a PMK cache. As shown in FIG. 1, before roaming, the STA and an original AP (an AP 1 in FIG. 1) complete an entire association negotiation between the STA and the original AP through user association, 802.1X authentication, unicast multicast key (key) agreement, encrypted data packet communication, and the like. In a unicast and multicast key (key) agreement process between the STA and the original AP, the STA caches a PMK and/or a PMK identifier (namely, the PMKID), and an access point controller (AP controller, AC) also caches a PMK and/or a PMKID. When the STA roams, the STA initiates a reassociation to a new AP (an AP 2 in FIG. 1), where the reassociation carries the PMKID cached by the STA. After receiving the PMKID, the new AP sends the PMKID to the AC. The AC checks, based on the PMKID sent by the new AP, whether same PMKID information is stored locally. If the same PMKID information is stored locally, it indicates that the STA has passed 802.1X authentication before. In this case, 802.1X authentication is not required again, and the STA directly performs unicast and multicast key derivation with the new AP. After the unicast and multicast key agreement is complete, the STA can use an agreed key to encrypt data and communicate with the new AP.

It can be learned that in a STA fast roaming mechanism that uses a PMK cache, the PMKID is cached, so that the STA directly skips a complex 802.1X authentication process after switching an AP. This reduces a roaming delay. However, the STA fast roaming mechanism that uses the PMK cache can only reduce an interruption time of data transmission during roaming, but cannot implement uninterrupted data transmission. The uninterrupted data transmission means that in a roaming process (or a process of switching from one BSS to another BSS, or a process of switching from one AP to another AP), there is always at least one link for data transmission.

Therefore, a key technology of the next-generation Wi-Fi standard IEEE 802.11be (referred to as Wi-Fi 7 by the Wi-Fi Alliance, also referred to as the extremely high throughput (extremely high throughput, EHT) standard) is a multi-link (multi-link) technology. Correspondingly, the multi-link technology needs to be supported by a multi-link device (multi-link device, MLD). The multi-link device refers to a device that has multiple radio frequency modules at the same time and the multiple radio frequency modules separately work on different bands or channels. Therefore, roaming of the multi-link device is expected to ensure uninterrupted data transmission. However, the following problem has not been resolved: how to implement roaming of the multi-link device in IEEE 802.11be, reduce an interruption time of data transmission in a roaming process, or enable uninterrupted data transmission in the roaming process.

WO 20201040589 A1 describes a method executed in a WLAN system, wherein a STA transmits/ receives data in a state of being currently associated with an AP by using a multi-link function. At the same time, the STA may perform a scanning process to discover another AP of another link. The STA includes two RFs. The STA maintains an association with the first AP through one RF in the first link. While maintaining the association with the first AP, the STA performs a scanning process to discover another AP (the second AP) through the second link through the remaining RF. The STA discovers nearby unassociated APs while transmitting and receiving data with the associated AP. The STA further performs the association process with the AP on the link on which the discovery process is performed.

The document "Indication of Multi-link Information" by Jang Insun et al., IEEE 802.11-20/0741r3, May 2020, discusses the indication of multi-link information to enable multi-link setup.

### SUMMARY

The invention is defined by the independent claims. Advantageous embodiments of the invention are given by the dependent claims.

According to embodiments of this application, when a multi-link device compliant with IEEE 802.11be roams, an interruption time of data transmission in a roaming process can be reduced, and an occasion for updating mapping information between a station and an access point is controlled, to avoid interrupting data transmission in the roaming process. Hereinafter, the description presents an embodiment of the invention, namely "Embodiment 1", whereas "Embodiment 2" and "Embodiment 3" are provided for illustrative purposes only, to support a better understanding of the invention.

### BRIEF DESCRIPTION OF DRAWINGS

FIG. 1 is a schematic diagram of implementing fast roaming of a STA by using a PMK cache;
FIG. 2 is a schematic diagram of an architecture of a wireless communication system according to an embodiment of this application;
FIG. 3 is a schematic diagram of a structure of a multi-link device according to an embodiment of this application;
FIG. 4 is a schematic diagram of a connection between an AP multi-link device and a non-AP multi-link device;
FIG. 5 is a schematic flowchart of a multi-link tentative association method according to an embodiment of this application;
FIG. 6a is a schematic diagram of a frame structure of a new element according to an embodiment of this application;
FIG. 6b is a schematic diagram of a frame structure of another new element according to an embodiment of this application;
FIG. 7a is a schematic diagram of a frame structure of a neighbor report element according to an embodiment of this application;
FIG. 7b is a schematic diagram of a frame structure of a reduced neighbor report element according to an embodiment of this application;
FIG. 7c is a schematic diagram of a frame structure of a 12-byte TBTT information length field according to an embodiment of this application;
FIG. 8 is a schematic interaction diagram in which a non-AP MLD and an AP MLD perform 802.1X authentication and perform PTK and GTK derivation through 4-way handshake according to an embodiment of this application;
FIG. 9a is a schematic diagram of a part or all of a frame structure of a BSS transition management query frame according to an embodiment of this application;
FIG. 9b is a schematic diagram of a part or all of a frame structure of a BSS transition management request frame according to an embodiment of this application;
FIG. 9c is a schematic diagram of a part or all of a frame structure of a BSS transition management response frame according to an embodiment of this application;
FIG. 10 is a schematic diagram of switching an AP MLD by a non-AP MLD in a roaming process according to an embodiment of this application;
FIG. 11A and FIG. 11B are a schematic diagram of signaling interaction of switching an AP MLD by a non-AP MLD in a roaming process according to an embodiment of this application;
FIG. 12a-1 and FIG. 12a-2 are a schematic diagram of a switching relationship between different states and types of frames allowed to be sent in different states according to an embodiment of this application;

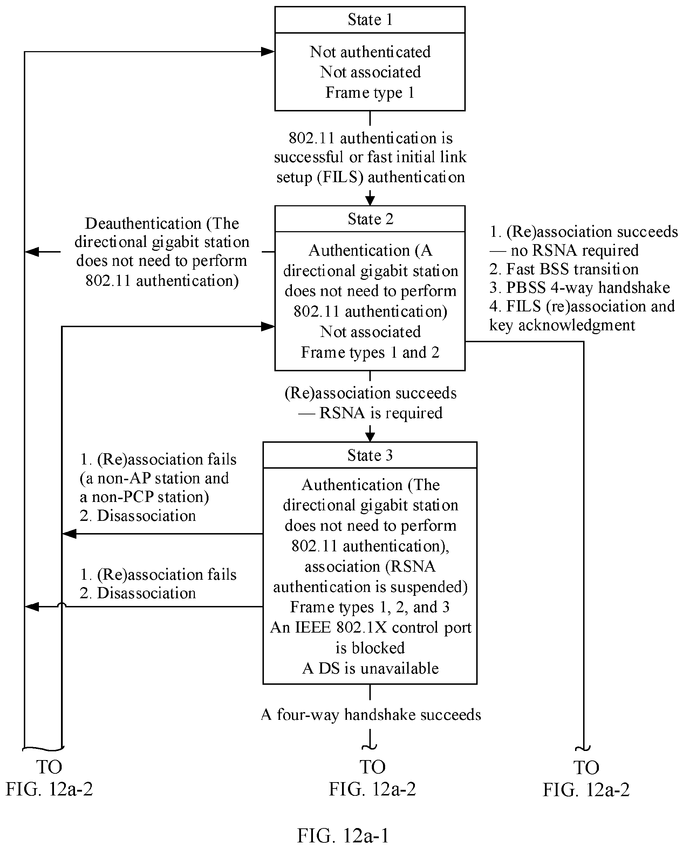

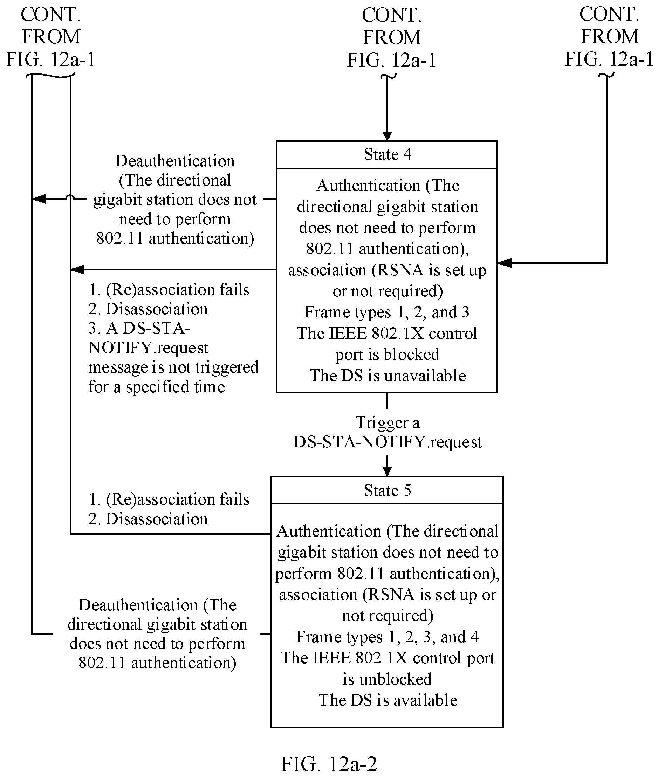

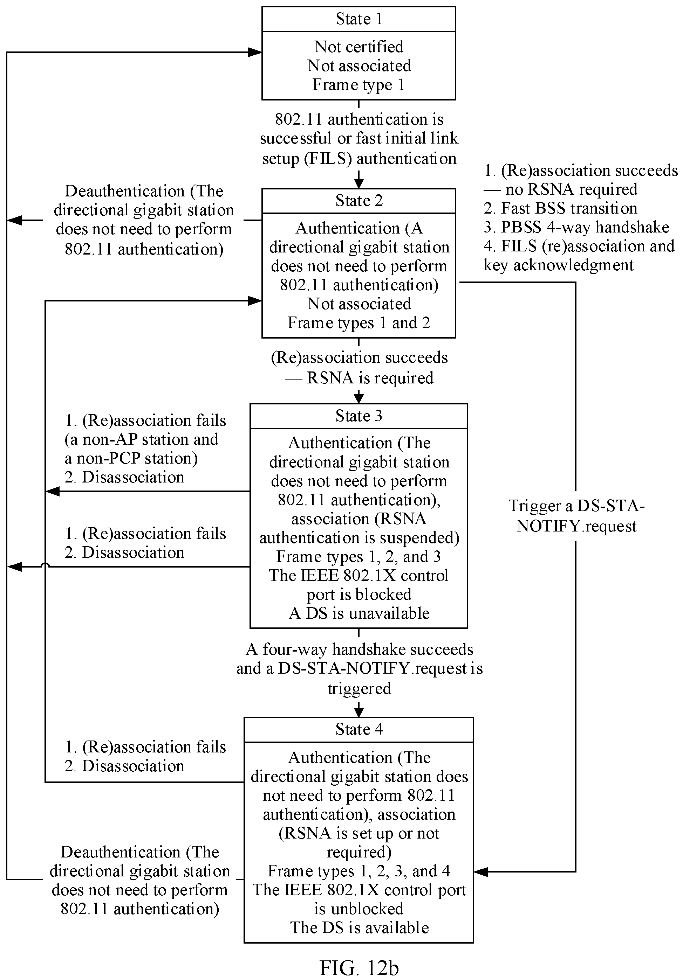

FIG. 12b is another schematic diagram of a switching relationship between different states and types of frames allowed to be sent in different states according to an embodiment of this application;

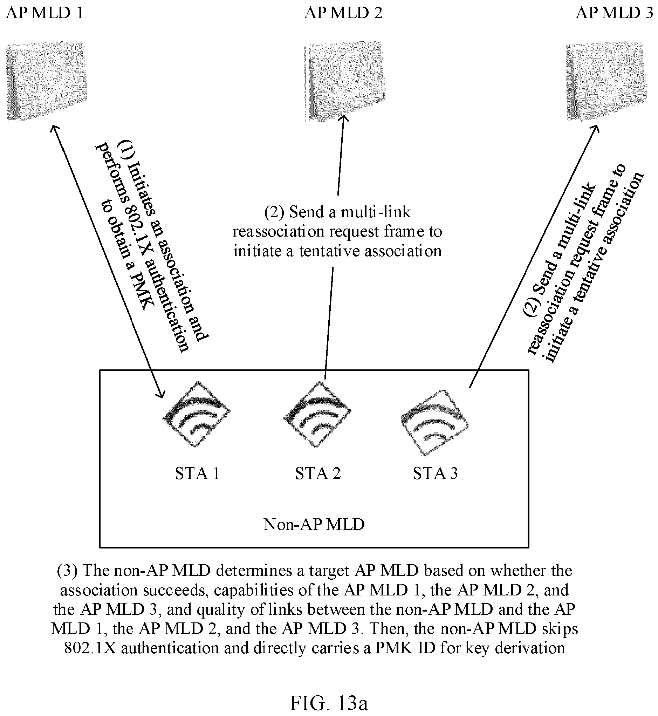

FIG. 13a is a schematic interaction diagram of a non-AP MLD and an AP MLD in an initial association process according to an embodiment of this application;

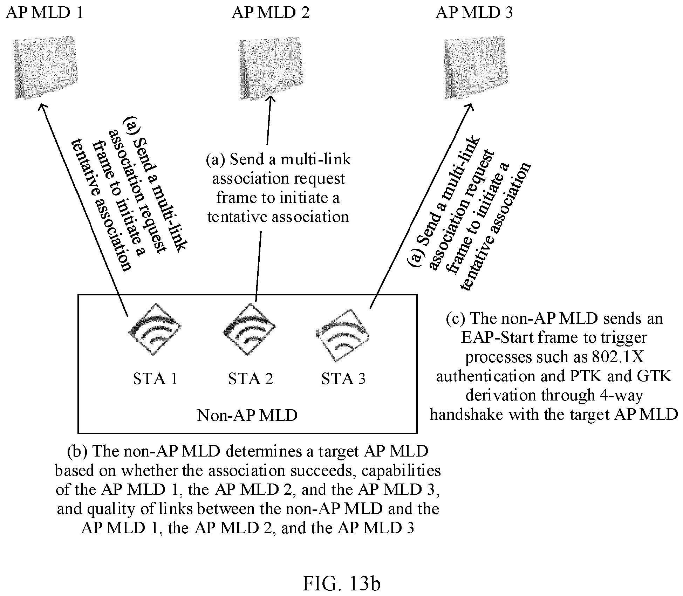

FIG. 13b is another schematic interaction diagram of a non-AP MLD and an AP MLD in an initial association process according to an embodiment of this application;

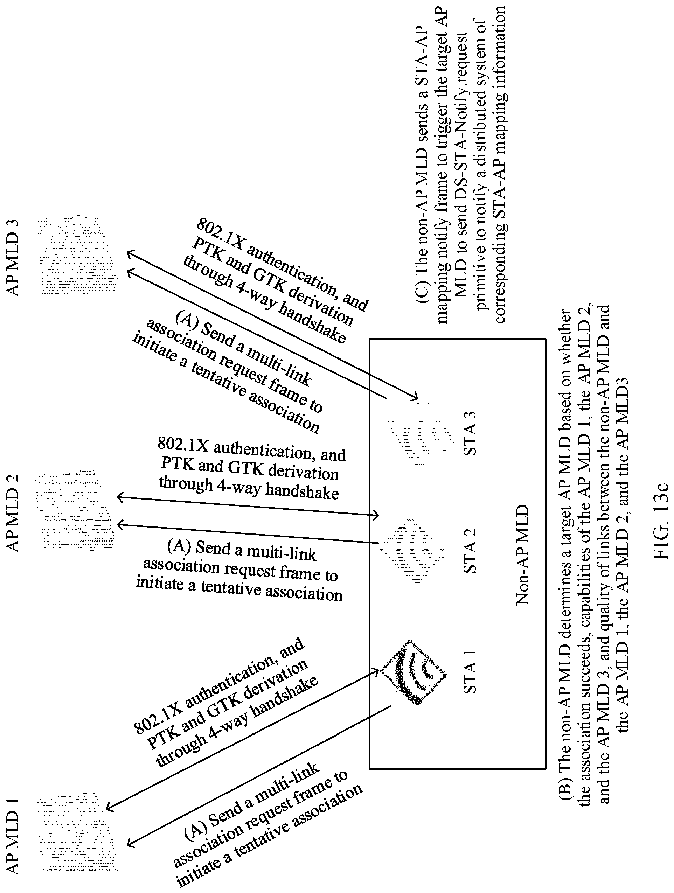

FIG. 13c is still another schematic interaction diagram of a non-AP MLD and an AP MLD in an initial association process according to an embodiment of this application;

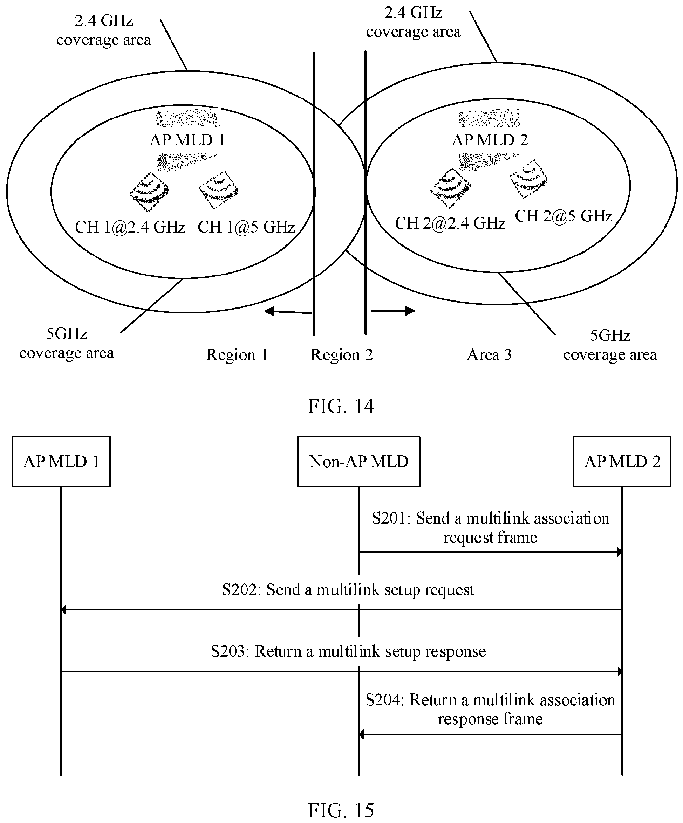

FIG. 14 is a schematic diagram of an optimal association scenario in a movement process of a non-AP MLD according to an embodiment of this application;
FIG. 15 is a schematic flowchart of an association method for a non co-located multi-link device according to an embodiment of this application;

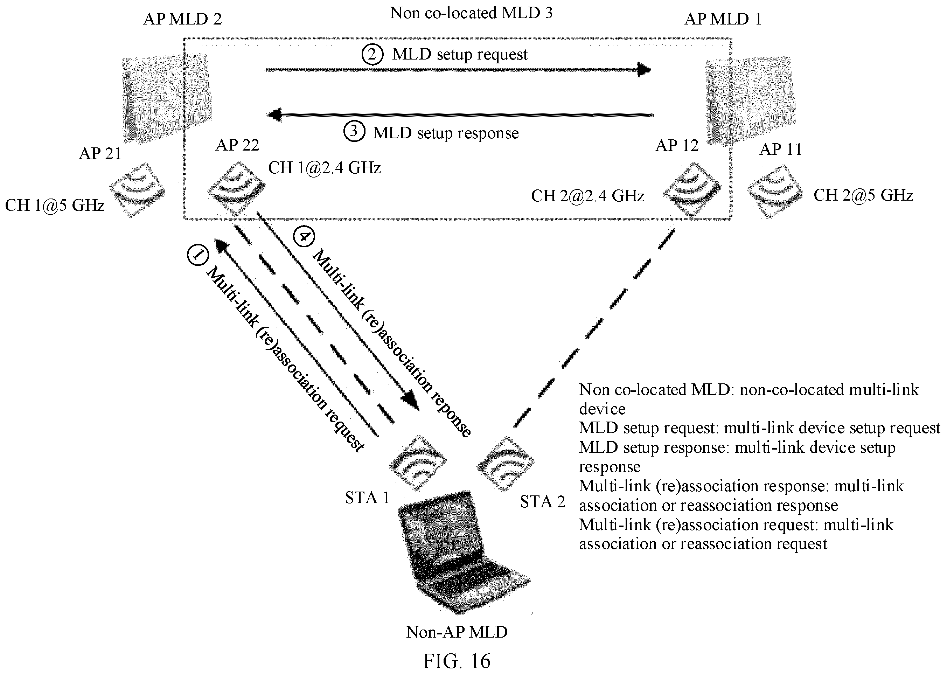

FIG. 16 is a schematic interaction diagram of a non-AP MLD and an AP MLD according to an embodiment of this application;

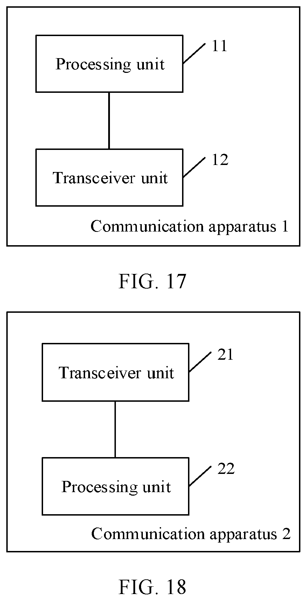

FIG. 17 is a schematic diagram of a structure of a communication apparatus according to an embodiment of this application; and
FIG. 18 is a schematic diagram of another structure of a communication apparatus according to an embodiment of this application.

### DESCRIPTION OF EMBODIMENTS

The following clearly and completely describes the technical solutions in embodiments of this application with reference to the accompanying drawings in embodiments of this application.

To better understand the multi-link tentative association method provided in embodiments of this application, the following describes a system architecture and/or an application scenario of the multi-link tentative association method provided in embodiments of this application. It may be understood that scenarios described in embodiments of this application are intended to describe the technical solutions in embodiments of this application more clearly, and do not constitute a limitation on the technical solutions provided in embodiments of this application.

Embodiments of this application provide a multi-link tentative association method applied to a wireless communication system. According to embodiments of this application, when a multi-link device compliant with IEEE 802.11be roams, an interruption time of data transmission in a roaming process can be reduced, and an occasion for updating mapping information between a station and an access point is controlled, to avoid interrupting data transmission in the roaming process. The wireless communication system may be a wireless local area network. The multi-link tentative association method may be implemented by a communication device in the wireless communication system or a chip or a processor in the communication device. The communication device may be a wireless communication device that supports multi-link concurrent transmission. For example, the communication device may be referred to as a multi-link device or a multi-band device (multi-band device). Optionally, according to a radio (Radio) quantity of the multi-link device, the multi-link device is further classified into a single-radio multi-link device and a multi-radio multi-link device.

The multi-radio (Radio) multi-link device includes multiple affiliated stations (affiliated STA). The affiliated station may be an access point (access point, AP) or a non-access point station (non-access point station, non-AP STA). For ease of description, in this application, a multi-link device whose affiliated station is an AP may be referred to as a multi-link AP, a multi-link AP device, or an AP multi-link device (AP multi-link device, AP MLD), and a multi-link device whose affiliated station is a non-AP STA may be referred to as a multi-link non-AP, a multi-link non-AP device, or a non-AP multi-link device (non-AP multi-link device, non-AP MLD). For ease of description, "the multi-link device includes an affiliated station" is also briefly described as "the multi-link device includes a station" in embodiments of this application.

A link identifier mentioned below represents a basic service set set up by the AP MLD on a specific channel of a specific band, namely, (an operating class (Operating Class), a channel number (channel number), and a basic service set identifier (BSSID)). The non-AP MLD associates multiple affiliated STAs with different APs of the AP MLD simultaneously through one association operation via a specific affiliated STA, to set up multiple transmitted links. The non-AP MLD and the AP MLD may indicate, by using a link identifier, a corresponding link and an AP and a non-AP STA corresponding to two ends of the link. Therefore, when related signaling is indicated between the non-AP MLD and the AP MLD, only a corresponding link identifier needs to be carried. This reduces signaling overheads.

In an example, when the AP multi-link device sets up a BSS, a sent management frame such as a beacon frame sent by the AP multi-link device carries an element including multiple link identifier information fields. Each link identifier information field includes a link identifier, and further includes one or more of a BSS identifier, an operating class, and a channel number. The one or more of the BSS identifier, the operating class, and the channel number correspond to the link identifier. In another example, in a process of setting up a multi-link association, the AP MLD and the non-AP MLD negotiate on multiple link identifier information fields. In subsequent communication, the AP MLD or non-AP MLD uses link identifiers to represent stations at both ends of a corresponding link.

The multi-link device may implement wireless communication in compliance with the IEEE 802.11 series protocols. For example, the multi-link device may be a station in compliance with the extremely high throughput rate, based on IEEE 802.11be, or compatible with IEEE 802.11be, to implement communication with other devices.

The multi-link tentative association method provided in embodiments of this application may be applied to a multi-link device roaming scenario in a wireless communication system, for example, a scenario in which at least one non-AP multi-link device roams between at least two AP multi-link devices, or a scenario in which at least one non-AP multi-link device is switched from one BSS to another BSS in a same ESS.

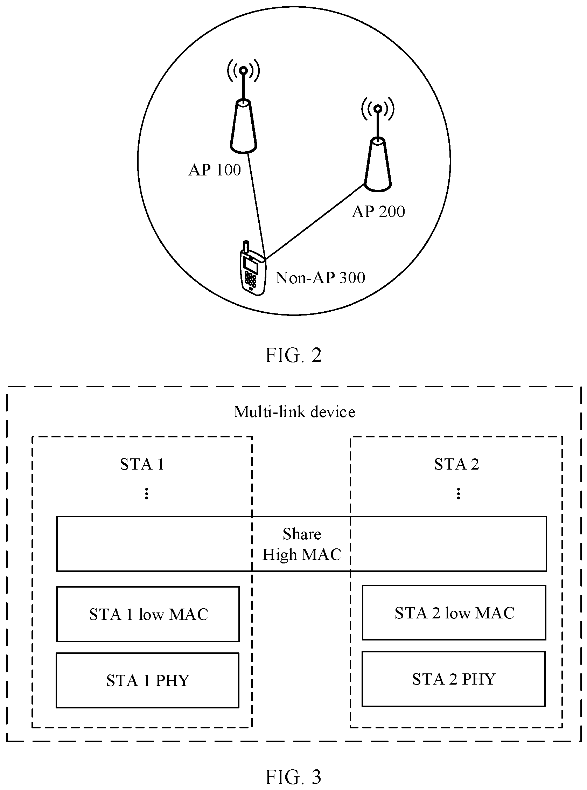

FIG. 2 is a schematic diagram of an architecture of a wireless communication system according to an embodiment of this application. As shown in FIG. 2, the wireless communication system includes multiple AP multi-link devices (for example, an AP multi-link device 100 and an AP multi-link device 200 in FIG. 2) and one non-AP multi-link device 300. The AP multi-link device is a multi-link device that provides a service for the non-AP multi-link device, and the non-AP multi-link device may communicate with the AP multi-link device over multiple links, to improve a throughput rate. The quantity of AP multi-link devices and the quantity of non-AP multi-link devices in FIG. 2 are merely an example.

For example, a multi-link device (for example, any one of the AP multi-link device 100, the AP multi-link device 200, the non-AP multi-link device 300 in FIG. 2) is an apparatus having a wireless communication function. The apparatus may be an entire device, or may be a chip, a processing system, or the like installed in an entire device. A device in which these chips or processing systems are installed may be controlled by these chips or processing systems, to implement the method and a function in embodiments of this application. For example, the non-AP multi-link device in embodiments of this application has a wireless transceiver function, may support the 802.11 series protocols, and may communicate with the AP multi-link device or another non-AP multi-link device. For example, the non-AP multi-link device is any user communication device that allows a user to communicate with an AP and then communicate with a WLAN. For example, the non-AP multi-link device may be user equipment that can be connected to a network, such as a tablet computer, a desktop computer, a laptop computer, a notebook computer, an ultra-mobile personal computer (Ultra-mobile personal computer, UMPC), a handheld computer, a netbook, a personal digital assistant (personal digital assistant, PDA), or a mobile phone, may be an internet of things node in the internet of things, or may be a vehicle-mounted communication apparatus in the internet of vehicles. The non-AP multi-link device may alternatively be a chip and a processing system in the foregoing terminals. The AP multi-link device in embodiments of this application is an apparatus that serves the non-AP multi-link device, and may support the 802.11 series protocols. For example, the AP multi-link device may be a communication entity such as a communication server, a router, a switch, or a bridge, or the AP multi-link device may include various forms of macro base stations, micro base stations, relay stations, and the like. Certainly, the AP multi-link device may alternatively be chips and processing systems in the various forms of devices, to implement the method and the function in embodiments of this application.

It can be understood that the multi-link device may support high-rate and low-latency transmission. With continuous evolution of application scenarios of the wireless local area network, the multi-link device may be further applied to more scenarios, for example, a sensor node (for example, a smart meter, a smart electricity meter, and a smart air detection node) in a smart city, a smart device (for example, a smart camera, a projector, a display screen, a TV, a stereo, a refrigerator, and a washing machine) in smart home, a node in the internet of things, an entertainment terminal (for example, a wearable device such as an AR and a VR), a smart device (such as a printer and a projector) in a smart office, an IoV device in the internet of vehicles, and some infrastructures (for example, a vending machine, a self-service navigation station of a supermarket, a self-service cash register device, and a self-service ordering machine) in daily life scenarios. Specific forms of the non-AP multi-link device and the AP multi-link device are not limited in embodiments of this application, and are merely described as examples herein. The 802.11 protocol may be a protocol that supports 802.11be or is compatible with 802.11be.

Optionally, refer to FIG. 3. FIG. 3 is a schematic diagram of a structure of a multi-link device according to an embodiment of this application. The IEEE 802.11 standard focuses on 802.11 physical layer (physical layer, PHY) and MAC layer parts in a multi-link device. As shown in FIG. 3, multiple STAs included in the multi-link device share one high MAC (high MAC) layer, but a low MAC (low MAC) layer and a PHY layer are independent of each other. It may be understood that the multiple STAs included in the multi-link device may alternatively be independent of each other at a low MAC layer and a PHY layer, and also be independent of each other at a high MAC layer. A schematic diagram of an internal structure of the multi-link device is not limited in this embodiment of this application. FIG. 3 is merely an example for description. For example, the high MAC layer or the low MAC layer may be implemented by one processor in a chip system of the multi-link device, or may be implemented by different processing modules in a chip system.

In this embodiment of this application, the multi-link device may allow services with a same service identifier (traffic identifier, TID) to be transmitted on different links, or even allow same data packets to be transmitted on different links. Alternatively, the multi-link device may not allow services of a same TID to be transmitted on different links, but may allow services of different TIDs to be transmitted on different links.

A band in which the multi-link device operates may include one or more bands of sub 1 GHz, 2.4 GHz, 5 GHz, 6 GHz, and a high frequency 60 GHz.

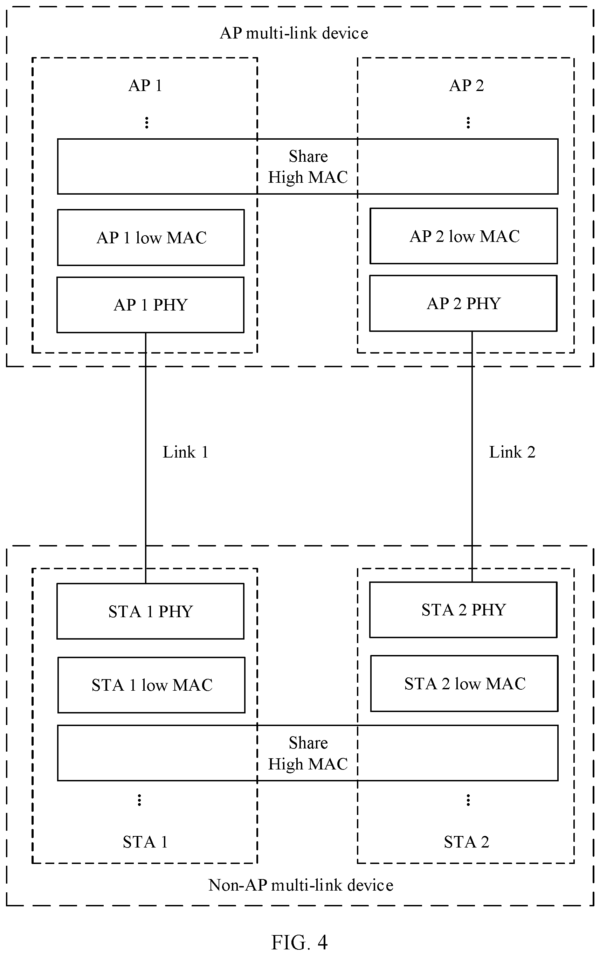

Optionally, refer to FIG. 4. FIG. 4 is a schematic diagram of a connection between an AP multi-link device and a non-AP multi-link device. As shown in FIG. 4, both a non-AP multi-link device and an AP multi-link device use a structure that shares a high MAC layer. The AP multi-link device includes two APs, and the non-AP multi-link device includes two STAs. One AP of the AP multi-link device may set up one link with one STA of the non-AP multi-link device for communication. For example, an AP 1 of the AP multi-link device in FIG. 4 sets up a link 1 with a STA 1 of the non-AP multi-link device for communication, and an AP 2 of the AP multi-link device in FIG. 4 sets up a link 2 with a STA 2 of the non-AP multi-link device for communication.

The foregoing content describes a system architecture and/or an application scenario of the multi-link tentative association method provided in embodiments of this application. The following describes in detail the multi-link communication method provided in embodiments of this application with reference to the accompanying drawings.

In some feasible implementations, a non-AP multi-link device mentioned in embodiments of this application may be the non-AP multi-link device 300 in FIG. 2, a first AP multi-link device may be the AP multi-link device 100 in FIG. 2, and a second multi-link device may be the AP multi-link device 200 in FIG. 2. It may be understood that the non-AP multi-link device in embodiments of this application may also be referred to as a STA multi-link device. Therefore, the non-AP multi-link device and the STA multi-link device may be replaced with each other for use.

In some feasible implementations, multi-link devices in embodiments of this application all support simultaneous transmit and receiving (simultaneous transmit and receive, STR) on multiple links, or a multi-link device in embodiments of this application has an STR capability. A multi-link device having an STR capability means that a spacing between working channels of any two radio frequency modules in the multi-link device is large enough, so that the any two radio frequency modules may not interfere with each other, may run independently, and can support normal receiving on one link while sending on another link.

### Embodiment 1

Embodiments of this application provide a multi-link tentative association method. Multiple radio/links on which a non-AP MLD can work simultaneously are used to perform tentative association with multiple AP MLDs simultaneously. In this way, data transmission is not interrupted or an interruption time of data transmission is reduced when a multi-link device roams.

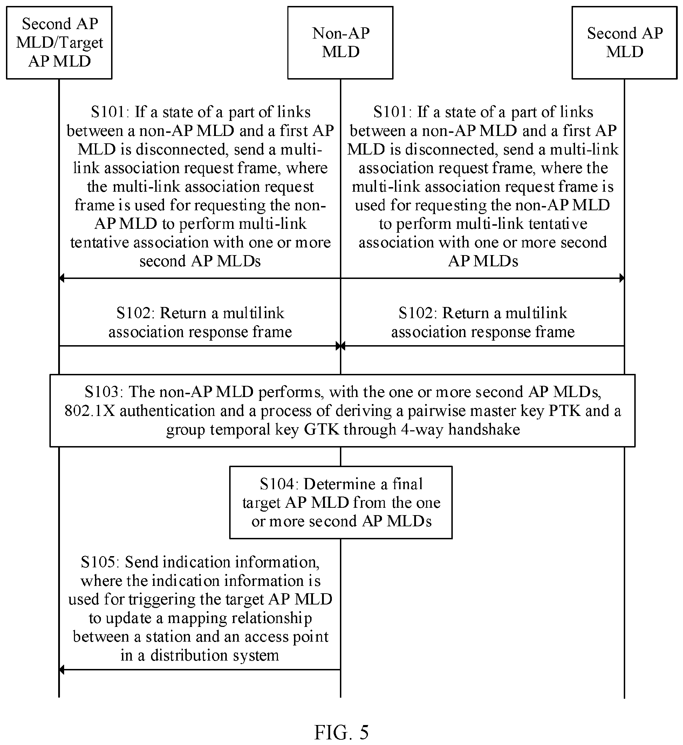

FIG. 5 is a schematic flowchart of a multi-link tentative association method according to an embodiment of this application. As shown in FIG. 5, the multi-link tentative association method provided in this embodiment of this application includes but is not limited to the following steps.

S101: If a state of a part of links between a non-AP MLD and a first AP MLD is disconnected (or disabled), one or more first STAs of the non-AP MLD each send a multi-link association request frame to one or more second AP MLDs, where the multi-link association request frame is used for requesting the non-AP MLD to perform multi-link tentative association with the one or more second AP MLDs. A state of a link between the first STA and the first AP MLD is disconnected (or disabled), and a state of a link between one or more second STAs of the non-AP MLD and the first AP MLD is connected (or enable).

S102: The one or more second AP MLDs return a multi-link association response frame to the non-AP MLD.

Specifically, if there is only one disabled link between the non-AP MLD and the first AP MLD, in other words, if there is only one first STA in the non-AP MLD, the first STA sends a multi-link association request frame to one second AP MLD, where a state of a link between the first STA of the non-AP MLD and the first AP MLD is disabled. If there are multiple disabled links between the non-AP MLD and the first AP MLD, in other words, if there are multiple first STAs in the non-AP MLD, any first STA of the non-AP MLD may send a multi-link association request frame to one second AP MLD. It may be understood that, if there are multiple first STAs in the non-AP MLD, the multiple first STAs of the non-AP MLD may send multi-link association request frames to multiple second AP MLDs. Correspondingly, the one or more second AP MLDs return the multi-link association response frame to the non-AP MLD.

The multi-link association request (multi-link Association Request) frame includes a state of a non-transmitted link between the non-AP MLD and the second AP MLD, for example, disabled or enabled. Optionally, when the state is disabled, the multi-link association request frame may further carry a reason code (Reason Code) field, which indicates a reason why a state of a link between the non-AP MLD and the second AP MLD is disabled. Specifically, if the state of the link between the non-AP MLD and the second AP MLD is disabled, the reason code field may further indicate that the reason why the state of the link is disabled is one of power saving, a low received signal strength indication, a tentative association, and an association with the first AP MLD (in other words, "association with an old AP MLD (Associated with old AP MLD)"). In this embodiment of this application, the reason code field carried in the multi-link association request frame may be set to "association with the old AP MLD".

Optionally, the non-AP MLD may simultaneously set up associations with multiple links of an AP MLD by performing a multi-link association operation on a specific link. A link on which a multi-link association request/response frame is exchanged is referred to as a transmitted link (Transmitted Link), and correspondingly, another link is referred to as a non-transmitted link (Non-transmitted Link).

Optionally, if an AP in the second AP MLD may also be disabled, the multi-link association response frame may also indicate whether each AP in the second AP MLD is disabled or enabled.

Optionally, the state of the non-transmitted link between the non-AP MLD and the second AP MLD may alternatively be implicitly indicated by a TID-to-link mapping (TID-to-link mapping). The TID-to-link mapping may be carried in the multi-link association request/response frame, or after an exchange of the multi-link association request/response frame is completed, a TID-to-mapping request may be separately sent, which indicates the state of the non-transmitted link between the non-AP MLD and the second AP MLD.

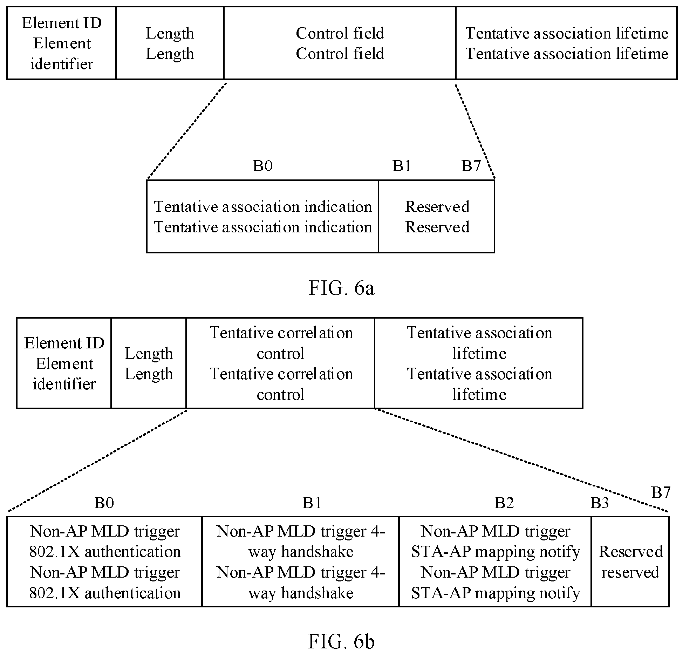

Optionally, the multi-link association request (multi-link Association Request) frame may carry tentative association (Tentative Association) indication information, and optionally, may further carry tentative association lifetime (Tentative Association lifetime) information. The tentative association indication information may indicate whether to perform tentative association. For example, if a field carrying the tentative association indication information is set to 1, it indicates that tentative association is to be performed. If a field carrying the tentative association indication information is set to 0, it indicates that normal association defined in an existing protocol is to be performed. It may be understood that a value and a meaning of the field carrying the tentative association indication information is not limited in this embodiment of this application. The tentative association lifetime information may indicate a lifetime of a tentative association. When a time during which the non-AP MLD and an AP MLD does not interact with each other exceeds the lifetime, the AP MLD deletes information previously negotiated with the non-AP MLD. The tentative association indication information and the tentative association lifetime information may be carried in a common information field in a multi-link aggregation (multi-link aggregation, MLA) element of the multi-link association request frame. Optionally, the tentative association indication information and the tentative association lifetime information may alternatively be carried in a newly defined element. FIG. 6a is a schematic diagram of a frame structure of a new element according to an embodiment of this application. As shown in FIG. 6a, a frame structure of the element includes an element identifier, a length, a control field, and a tentative association lifetime. In the control field, 1 bit indicates whether to perform tentative association, and remaining 7 bits are reserved.

Optionally, the multi-link association request frame may carry a tentative association control field and the tentative association lifetime. The tentative association control field includes three indicator bits: a non-AP MLD trigger 802.1X authentication indicator bit, a non-AP MLD trigger 4-way handshake indicator bit, and a non-AP MLD trigger STA-AP mapping notify indicator bit. Specifically, when the non-AP MLD trigger 802.1X authentication indicator bit is set to 1, it indicates that the non-AP MLD actively sends a message to trigger starting an 802.1X authentication process. When the non-AP MLD trigger 4-way handshake indicator bit is set to 1, it indicates that the non-AP MLD actively sends a message to trigger starting a 4-way handshake process. When the non-AP MLD trigger STA-AP mapping notify indicator bit is set to 1, it indicates that the non-AP MLD actively sends a message to trigger a STA-AP mapping notification. It may be understood that values and meanings of the three indicator bits included in the tentative association control field are not limited. The tentative association lifetime information may indicate a lifetime of a tentative association. When a time during which the non-AP MLD and an AP MLD does not interact with each other exceeds the lifetime, the AP MLD deletes information previously negotiated with the non-AP MLD.

Optionally, the tentative association control field and the tentative association lifetime may be carried in a newly defined element. FIG. 6b is a schematic diagram of a frame structure of another new element according to an embodiment of this application. As shown in FIG. 6b, a frame structure of the element includes an element identifier, a length, a tentative association control field, and a tentative association lifetime. The tentative association control field includes a 1-bit non-AP MLD trigger 802.1X authentication indicator bit, a 1-bit non-AP MLD trigger 4-way handshake indicator bit, a 1-bit non-AP MLD trigger STA-AP mapping notify indicator bit, and remaining 4 bits are reserved.

Optionally, the non-AP MLD may receive tentative association capability indication information sent by each AP MLD. The tentative association capability indication information may indicate whether the AP MLD supports the tentative association. The tentative association capability indication information may be carried in a fast BSS transition element (Fast BSS Transition element), a multi-link aggregation (MLA) element, or a mobility domain element (Mobility Domain element). The fast BSS transition element may be carried in a beacon (Beacon) frame.

Specifically, 1 bit may be added to a neighbor report element (neighbor report element) and a reduced neighbor report element (reduced neighbor report element), to indicate whether a neighbor AP or a neighbor AP MLD supports tentative association. The neighbor report element may describe a neighbor AP and BSS information of the neighbor AP. An AP may indicate related information of all neighbors by carrying multiple neighbor report elements. A reserved bit in a BSSID information field in the neighbor report element indicates whether a BSS supports tentative association. A reserved bit in a BSS parameter field in the reduced neighbor report element indicates whether the BSS supports tentative association.

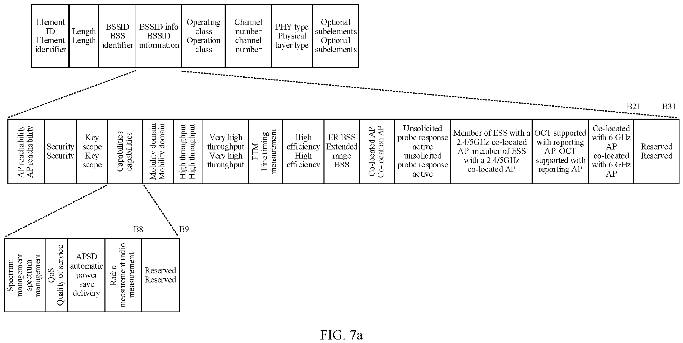

FIG. 7a is a schematic diagram of a frame structure of a neighbor report element according to an embodiment of this application. As shown in FIG. 7a, the neighbor report element includes an element identifier, a length, a BSS identifier, BSSID information, an operating class, a channel number, a physical layer type, an optional subelements field, and the like. The BSSID field indicates a BSSID corresponding to a reported neighbor AP. The BSSID information field indicates related information of a reported BSSID. The operating class (operating class) field and a channel number (channel number) field indicate a channel on which the reported BSSID is located. The PHY type (physical layer type) field indicates a physical layer type of an AP corresponding to the reported BSSID. The optional subelements (optional subelement) field carries some optional child elements.

The BSSID information field carries the following specific information: 1. An AP reachability field: The AP reachability field indicates whether an AP is reachable. 2. Security field: The security field indicates whether the reported AP supports a same security configuration as that of an existing connection. 3. Key scope field: The key scope field indicates whether the reported AP and an AP that sends the report have a same authenticator. 4. Capabilities field: The capabilities field indicates a portion of optional capability information of the reported AP. 5. Mobility domain field: The mobility domain field indicates whether the reported AP and the AP that sends the report are in a same mobility domain. 6. High throughput field: The high throughput field indicates that content of an HT capabilities element (carried in the optional subelements field) of the reported AP is the same as content of an HT capabilities element of the AP that sends the report. 7. Very high throughput field: The very high throughput field indicates that content of a VHT capabilities element of the reported AP is the same as content of a VHT capabilities element of the AP that sends the report. 8. FTM (fine timing measurement) field: The FTM field indicates whether the reported AP supports fine timing measurement. 9. High efficiency field: The high efficiency field indicates that content of a HE capabilities element of the reported AP is the same as content of a HE capabilities element of the AP that sends the report. 10. ER (Extended range) BSS field: The ER BSS field indicates that a beacon sent by the reported AP is sent in an HE ER SU PPDU. 11. Co-located AP field: The co-located AP field indicates whether the reported AP and the AP that sends the report are co-located APs. 12. Unsolicited probe response active field: The unsolicited probe response active field indicates whether the reported AP enables an active probe response function. 13. Member of ESS with 2.4/5 GHz co-located AP field: The member of ESS with 2.4/5 GHz co-located AP field indicates whether the reported AP shares a location with a 2.4/5 GHz AP and is a member of an extended service set. 14. OCT supported with reported AP field: The OCT supported with reported AP field indicates whether the reported AP supports exchange of an MPDU of a management frame type by using an on-channel tunneling (OCT) mechanism. 15. Co-located with 6 GHz AP field: The co-located with 6 GHz AP field indicates whether the reported AP shares a same location with a 6 GHz AP. 16. Reserved field.

Specifically, the capabilities field further includes the following information fields: a spectrum management field, indicating whether the reported AP supports a spectrum management function; a QoS (quality of service, quality of service) field, indicating whether the reported AP supports a QoS mechanism; an APSD (automatic power save delivery) field, indicating whether the reported AP supports an automatic power saving delivery mechanism; and a radio measurement field, indicating whether the reported AP supports a radio measurement function.

Optionally, the AP MLD may include the reduced neighbor report element in a management frame, for example, a beacon frame or a probe response frame. When scanning, the non-AP MLD receives an association frame from an AP MLD to obtain information about a neighbor AP. Then, the non-AP MLD selects an appropriate AP MLD to perform association.

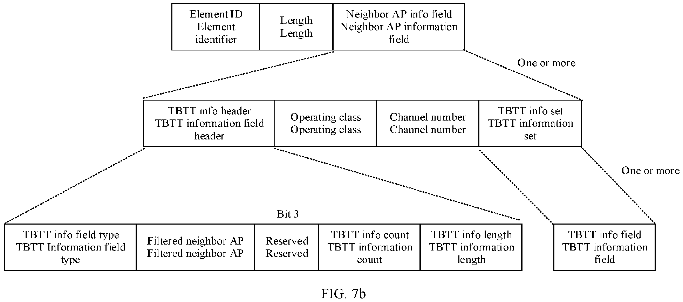

FIG. 7b is a schematic diagram of a frame structure of a reduced neighbor report element according to an embodiment of this application. As shown in FIG. 7b, the reduced neighbor report element includes an element identifier, a length, and one or more neighbor AP information fields. One neighbor AP information field includes a target beacon transmission time (target beacon transmission time, TBTT) information field header, an operating class, a channel number, and a TBTT information set. The TBTT information set includes one or more TBTT information fields.

The TBTT information field header carries the following information: a TBTT info field type field, indicating a type of TBTT info, and used together with a TBTT information length field to indicate a format of a TBTT info field; a filtered neighbor AP field, indicating whether SSIDs of all BSSs carried in the neighbor AP info field match SSIDs in a probe request frame; a reserved field (1 bit); a TBTT info count field, indicating a quantity of TBTT information fields included in a TBTT information set; and a TBTT info length field, indicating a length of each TBTT info field.

Specific information formats carried in TBTT info length fields with different lengths are shown in the following table 1.

| TBTT information length (byte) | Content carried in a TBTT information field |
|---|---|
| 1 | Neighbor AP TBTT offset field |
| 2 | Neighbor AP TBTT offset field and BSS parameter field |
| 5 | Neighbor AP TBTT offset field and short SSID field |
| 6 | Neighbor AP TBTT offset field, short SSID field, and BSS parameter field |
| 7 | Neighbor AP TBTT offset field and BSSID field |
| 8 | Neighbor AP TBTT offset field, BSSID field, and BSS parameter field |
| 11 | Neighbor AP TBTT offset field, BSSID field, and short SSID field |
| 12 | Neighbor AP TBTT offset field, BSSID field, short SSID field, and BSS parameter field |
| 0, 9 and 10 | Reserved |
| 13 to 255 | Reserved, but information about first 12 bytes is the same as the fields carried when the TBTT information length is 12 |

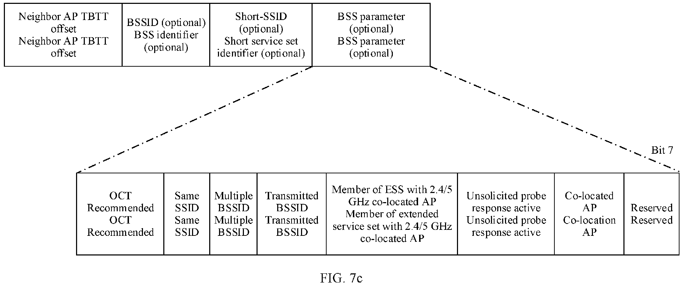

FIG. 7c is a schematic diagram of a frame structure of a 12-byte TBTT information length field according to an embodiment of this application. As shown in FIG. 7c, the 12-byte TBTT information length field includes the neighbor AP TBTT offset, the BSS identifier, the short service set identifier, and the BSS parameter. Neighbor AP TBTT offset field: The neighbor AP TBTT offset indicates an offset between a beacon sending time of a reported BSS and a beacon sending time of a BSS that sends the report. BSSID field: The BSSID field indicates a BSS identifier corresponding to the reported BSS. Short SSID field: The short SSID field indicates a service set identifier to which the BSS belongs. BSS Parameter (BSS parameter) field: The BSS parameter field indicates a related parameter of the BSS.

The BSS parameter field specifically includes the following indication information: (1) OCT recommended (on-channel tunneling mechanism recommended) field: The OCT recommended field indicates that the reported BSS expects to exchange an MPDU of a management type with the reported AP by using the OCT mechanism. (2) Same SSID (same service set identifier) field: The same SSID field indicates whether the reported AP and the AP transmitting the report have a same SSID. (3) Multiple BSSID (multiple basic service set identifier) field: The multiple BSSID field indicates whether the reported AP belongs to a part of a multiple BSSID set. (4) Transmitted BSSID (transmitted basic service set identifier) field: The transmitted basic service set identifier indicates whether the reported AP is a transmitted BSSID or a non-transmitted BSSID if the reported AP is a part of the multiple BSSID set. (5) Member of ESS with 2.4/5 GHz co-located AP (member of extended service set with 2.4/5 GHz co-located AP) field: The member of ESS with 2.4/5 GHz co-located AP field indicates whether the reported AP shares a location with a 2.4/5 GHz AP (in other words, whether the neighbor AP is a 6 GHz only AP) and indicates that the neighbor AP is a member of an extended service set. (6) Unsolicited probe response active (Unsolicited probe response active) field: The unsolicited probe response active field indicates whether the reported AP enables an active probe response function. (7) Co-located AP (co-located AP) field: The co-located AP field indicates whether the reported AP and the AP transmitting the Report are co-located. (8) Reserved field.

S103: The non-AP MLD performs processes of 802.1X authentication and PTK and GTK derivation through 4-way handshake with the one or more second AP MLDs.

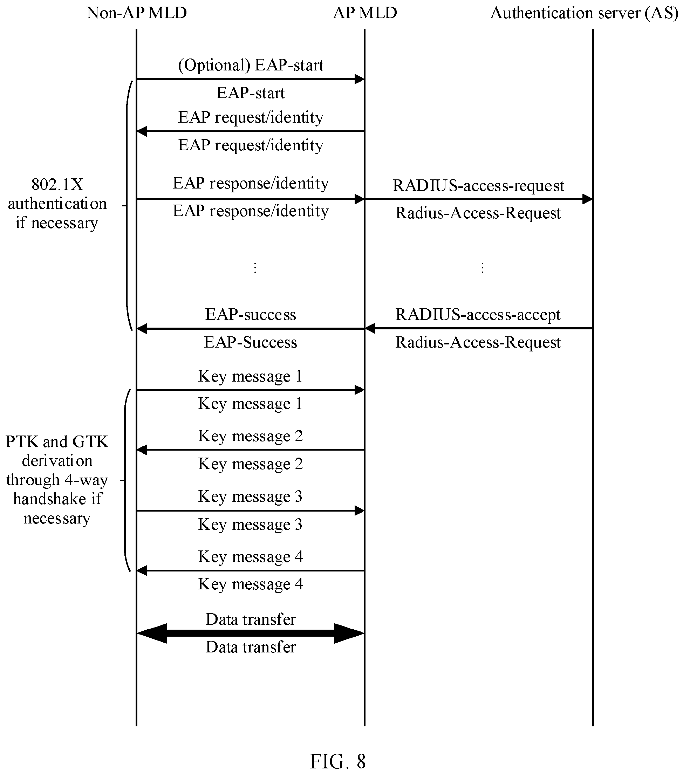

Specifically, when the multi-link association response frame indicates that the association succeeds, the non-AP MLD and the AP MLD perform 802.1X authentication to obtain a PMK, and may derive the pairwise transient key (pairwise transient key, PTK) and the group temporal key (group temporal key, GTK) through 4-way handshake. FIG. 8 is a schematic interaction diagram in which the non-AP MLD performs 802.1X authentication and PTK and GTK derivation through 4-way handshake with one AP MLD according to an embodiment of this application. As shown in FIG. 8, the AP MLD sends an extensible authentication protocol (extensible authentication protocol, EAP) request (request)/identity (identity) to the non-AP MLD. The non-AP MLD returns an EAP response/identity to the AP MLD. The AP MLD sends a RADIUS access request to the authentication server (authentication server, AS). After a series of interactions and the EAP is successful, a process of PTK and GTK derivation through 4-way handshake is performed. As shown in FIG. 8, the process of PTK and GTK derivation through 4-way handshake includes: The non-AP MLD sends a key message 1 (Key Message 1) to the AP MLD. The AP MLD returns a key message 2 (Key Message 2) to the non-AP MLD. The non-AP MLD sends a key message 3 (Key Message 3) to the AP MLD. The AP MLD returns a key message 4 (Key Message 4) to the non-AP MLD. After obtaining the PTK and GTK, the non-AP MLD and AP MLD use a corresponding key to encrypt a data packet based on a type of the sent packet type.

It may be understood that, for a process in which the non-AP MLD performs 802.1X authentication and PTK and GTK derivation through 4-way handshake with multiple second AP MLDs, refer to the process in which the single non-AP MLD performs 802.1X authentication and PTK and GTK derivation through 4-way handshake with the single AP MLD. Details are not described herein again. It may be further understood that the non-AP MLD may simultaneously perform the processes of 802.1X authentication and PTK and GTK derivation through 4-way handshake with the multiple second AP MLDs, to improve a roaming success rate. This is because one first STA of the non-AP MLD may perform processes of 802.1X authentication and PTK and GTK derivation through 4-way handshake with one second AP MLD. Therefore, multiple first STAs in the non-AP MLD may simultaneously perform processes of 802.1X authentication and PTK and GTK derivation through 4-way handshake with the multiple second AP MLDs.

S104: The non-AP MLD determines a final target AP MLD from the one or more second AP MLDs.

S105: The non-AP MLD sends one piece of indication information to the target AP MLD, to trigger the target AP MLD to update a mapping relationship between a station and an access point in a distribution system (distribution system, DS).

Specifically, the indication information may be carried in an A-control (A-Control) field. Optionally, the indication information may alternatively be carried in a newly defined frame. For ease of description, a frame carrying the indication information is referred to as a STA-AP mapping notify frame below. It may be understood that the frame carrying the indication information may also be referred to as a STA-AP mapping trigger frame or the like. A name of the frame carrying the indication information is not limited in this embodiment of this application.

Optionally, the non-AP MLD may select the final target AP MLD from the multiple second AP MLDs based on whether association between the non-AP MLD and the multiple second AP MLDs succeeds, a capability of each second AP MLD, and quality of a link between the non-AP MLD and each second AP MLD. It may be understood that, if there is only one second AP MLD, the non-AP MLD directly sends the indication information to the second AP MLD.

In an optional embodiment, the foregoing step S101 to step S103 may be described as follows: The non-AP MLD uses one or more disabled links to perform multi-link tentative association (multi-link tentative association) with one or more second AP MLDs simultaneously, and perform various operations/processes except triggering sending of DS-STA-Notify.request primitive.

In another optional embodiment, it is assumed that the non-AP MLD has three links. The non-AP MLD may set states of two links between the non-AP MLD and the first AP MLD to disabled, and then use corresponding STAs to perform tentative reassociation with two neighbor second AP MLDs simultaneously. The non-AP MLD determines, based on whether the association succeeds, capabilities of the two neighbor second AP MLDs, and quality of a link between the non-AP MLD and each second AP MLD, to finally perform reassociation with a specific second AP MLD of the non-AP MLD. Then, the non-AP MLD may skip 802.1X authentication, and directly perform PTK and/or GTK derivation.

Optionally, because the non-AP MLD may skip 802.1X authentication, the non-AP MLD needs to send a newly defined frame, to trigger PTK and GTK derivation through 4-way handshake with a new AP MLD.

It may be understood that, in actual application, a process of the multi-link tentative association method provided in this embodiment of this application may be more than step 101 to step S104. The following describes a process that may be further included in the multi-link tentative association method provided in this embodiment of this application.

In an example, before step S101, the method further includes step S106: The non-AP MLD sends link state indication information to the first AP MLD, where the link state indication information indicates a link whose link state is disabled and that is between the non-AP MLD and the first AP MLD. The link state indication information may include one or more link identifiers between the non-AP MLD and the first AP MLD and a state corresponding to each link identifier. Optionally, the link state indication information may further indicate a reason why a state of one or more links between the non-AP MLD and the first AP MLD is disabled. It may be understood that the reason why the state of the link between the non-AP MLD and the first AP MLD is disabled may include one of power saving, a low received signal strength indication, and a tentative association. It may be further understood that, in this embodiment of this application, a reason why the state that is indicated by the link state indication information and that is of the one or more links between the non-AP MLD and the first AP MLD is disabled is the tentative association.

In this embodiment of this application, the link state indication information is used for notifying the first AP MLD that one or more links are disabled due to the tentative association, to avoid an attempt by the first AP MLD to request enabling of the one or more links due to a large amount of to-be-transmitted data.

In an example, before step S105, the method further includes step S107: The non-AP MLD sends a first request to the first AP MLD, where the first request is used for requesting the first AP MLD to feed back neighbor information of the first AP MLD. The neighbor information herein may refer to another AP MLD around the first AP MLD, or another BSS around a BSS in which the first AP MLD is located. Specifically, the non-AP MLD may send a BSS transition management query (BSS Transition Management Query) frame to the first AP MLD, where the BSS transition management query frame is used for requesting the first AP MLD to feed back information about a neighbor around the first AP MLD. The first AP MLD sends a BSS transition management request (BSS Transition Management Request) frame to the non-AP MLD. After receiving the BSS transition management request frame, the non-AP MLD returns a BSS transition management response (BSS Transition Management Response) frame to the first AP MLD.

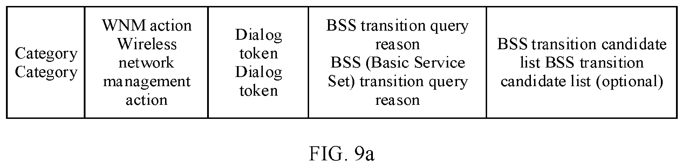

Optionally, the BSS transition management query frame may include a BSS transition query reason field and a BSS transition candidate list field. The BSS transition query reason field may indicate a reason for performing BSS transition management query. The BSS transition candidate list field may carry one or more neighbor report information elements (Neighbor Report element). FIG. 9a is a schematic diagram of a part or all of a frame structure of a BSS transition management query frame according to an embodiment of this application.

The BSS transition management request frame may include the following fields: a preferred candidate list included (Preferred Candidate list included) indicator bit (Bit 0), an abridged (Abridged) indicator bit (Bit 1), a disassociation imminent (Disassociation Imminent) indicator bit (Bit 2), a BSS termination included (BSS Termination Included) indicator bit (Bit 3), an ESS disassociation imminent (ESS Disassociation Imminent) indicator bit (Bit 4), a disassociation timer (Disassociation Timer) field, and a validity interval (Validity Interval) field, and the like.

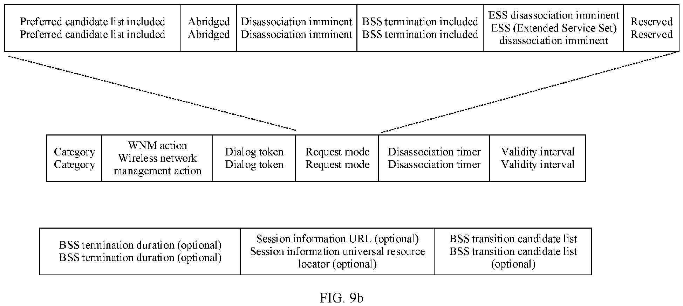

FIG. 9b is a schematic diagram of a part or all of a frame structure of a BSS transition management request frame according to an embodiment of this application. When the preferred candidate list included indicator bit is set to 0, it indicates that the non-AP MLD may ignore information in the BSS transition candidate list (BSS Transition Candidate List) field. When the preferred candidate list included indicator bit is set to 1, it indicates that the AP MLD expects the non-AP MLD to process information in the BSS transition candidate list field. The disassociation imminent indicator bit indicates whether the non-AP MLD is to be disassociated. When the disassociation imminent indicator bit is set to 1, the non-AP MLD is immediately disassociated from the AP MLD. When the disassociation imminent indicator bit is set to 0, the disassociation does not occur immediately. When BSS termination included indicator bit is set to 1, the BSS is to be terminated. When BSS termination included indicator bit is set to 0, a BSS termination duration (BSS Termination Duration) field is not carried. The ESS disassociation imminent indicator bit indicates whether a session information universal resource locator (Session Information URL) field is carried and whether the non-AP MLD is disassociated from an ESS. If the ESS disassociation imminent indicator bit is set to 1, a STA is disassociated from the ESS and the session information URL field is to be carried. If ESS disassociation imminent is set to 0, the STA is not disassociated from the ESS immediately. The disassociation timer field indicates a time period after which the AP MLD sends a disassociation frame to the non-AP MLD. The validity interval field indicates a validity interval of the BSS transition candidate list information.

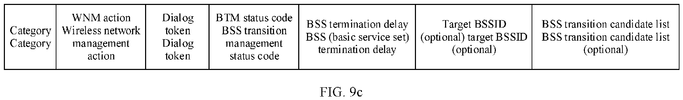

The BSS transition management response frame may include a BSS transition management status code (BTM Status Code) field, a BSS termination delay (BSS Termination Delay) field, a target BSS identifier (Target BSSID), a BSS transition candidate list field, and the like. FIG. 9c is a schematic diagram of a part or all of a frame structure of a BSS transition management response frame according to an embodiment of this application. The BTM status code field indicates status information fed back for a BSS switching request, for example, indicates whether the BSS switching is accepted. The BSS termination delay field indicates a time period, expected by the non-AP MLD, after which the AP MLD terminates the BSS. The target BSSID indicates an identifier of a target BSS for switching. The BSS transition candidate list field may carry one or more neighbor report information elements.

Optionally, the target BSS identifier in the BSS transition management response frame in this embodiment of this application may carry a service access point (service access point, SAP) MAC address of the target AP MLD.

Optionally, step S107 may alternatively be: The non-AP MLD actively sends a BSS transition management query frame to the first AP MLD, to request the first AP MLD to provide neighbor information of the non-AP MLD. Optionally, step S107 may alternatively be: The non-AP MLD switches to another channel (herein, the another channel may refer to a channel different from a channel of the first AP MLD) and performs active or passive scanning, to obtain neighbor information of the first AP MLD.

In an example, after step S104, the method further includes step S108: The target AP MLD sends DS-STA-Notify.request primitive to the distributed system. The DS-STA-Notify.request primitive carries mapping information between the target AP MLD and the non-AP MLD, or an association relationship between the target AP MLD and the non-AP MLD. The DS-STA-Notify.request primitive is used for notifying of STA-AP mapping information of the distribution system. This is because each non-AP MLD can be associated with only one AP MLD. The distribution system must know which AP MLD serves the non-AP MLD, and then deliver a data packet whose destination address is a MAC address of the non-AP MLD to the corresponding AP MLD.

Optionally, before the target AP MLD sends the DS-STA-Notify.request primitive, the non-AP MLD may perform block acknowledgment (block acknowledgement, BA) negotiation with the target AP MLD.

Optionally, the DS-STA-Notify.request primitive may carry the SAP MAC address of the non-AP MLD and an update type (Update Type). The update type may include three types: ADD (add), MOVE (move), and DELETE (delete). ADD is used in DS-STA-Notify.request primitive sent by the AP MLD when the non-AP MLD associates with a specific AP MLD for the first time. DELETE is used in D S-STA-Notify.request primitive sent by the AP MLD when the non-AP MLD disassociates from a specific AP MLD for the first time. MOVE is used in DS-STA-Notify.request primitive sent by the AP MLD when the non-AP MLD switches from a specific AP MLD to a new AP MLD.

It can be learned that, in this embodiment of this application, the update type carried in the DS-STA-Notify.request primitive sent by the target AP MLD is MOVE. When a client is the non-AP MLD, the MAC address in the DS-STA-Notify.request primitive sent by the target AP MLD is the SAP MAC address of the non-AP MLD. Optionally, SAP MAC addresses of the non-AP MLD and the AP MLD are also used in the STA-AP mapping information.

In an example, after step S104, the method further includes step S109: If a time during which no data is transmitted between the first AP MLD and the non-AP MLD when a channel is in an idle state exceeds a preset time, the non-AP MLD may actively send a multi-link disassociation frame to the first AP MLD. Then, the non-AP MLD may switch one or more second STAs to a channel of a link corresponding to the target AP MLD, where a state of a remaining link between the one or more second STAs and the first AP MLD are enabled, and notify the target AP MLD that the state of the link between the one or more second STAs and the target AP MLD changes to enabled.

Optionally, after step S104, the non-AP MLD may alternatively send a multi-link disassociation frame to the first AP MLD immediately, switch to a channel of a link corresponding to the target AP MLD, and notify the target AP MLD that a state of the link changes to enabled.

It may be understood that step S108 and step S109 may be simultaneously performed, step S108 may be performed before step S109, or step S108 may be performed after step S109. An execution sequence between step S108 and step S109 is not limited in this embodiment of this application.

In this embodiment of this application, the non-AP MLD disconnects a part of links between the non-AP MLD and a currently associated AP MLD (namely, the first AP MLD), and then sends the multi-link association request frame to the one or more second AP MLDs by using a STA whose link state is disconnected, to request to perform multi-link tentative association with the one or more second AP MLDs. The one or more second AP MLDs return the multi-link association response frame to the non-AP MLD. If the multi-link association response frame indicates to agree to perform multi-link tentative association, the non-AP MLD may perform 802.1X authentication and a 4-way handshake key exchange process with the one or more second AP MLDs. After the 4-way handshake key exchange is completed, the non-AP MLD selects the target AP MLD from the one or more second AP MLDs based on whether the association succeeds, the capability of each second AP MLD, and the quality of the link between the non-AP MLD and each second AP MLD, and triggers, by using one piece of indication information, the target AP MLD to update the mapping relationship between the station and the access point in the distribution system. In this way, when a multi-link device roams, an interruption time of data transmission can be reduced, and ideally, data transmission is not interrupted in a roaming process. In other words, there is always an available link for data transmission at any moment.

To better understand the technical solution in the embodiment 1 of this application, the following describes the technical solution in the embodiment 1 by using an example with reference to two specific examples. An example 1 shows a specific process of the multi-link tentative association method provided in the embodiment 1, and an example 2 shows a signaling interaction process of the multi-link tentative association method provided in the embodiment 1.

It may be understood that, in the following specific examples, it is assumed that the first AP multi-link device is an AP MLD 1, and the second AP multi-link device is an AP MLD 2. The AP MLD 1 includes an AP 11 and an AP 12, the AP MLD 2 includes an AP 21 and an AP 22, and the non-AP multi-link device includes a STA 1 and a STA 2. The non-AP multi-link device associates with the AP MLD 1 before roaming.

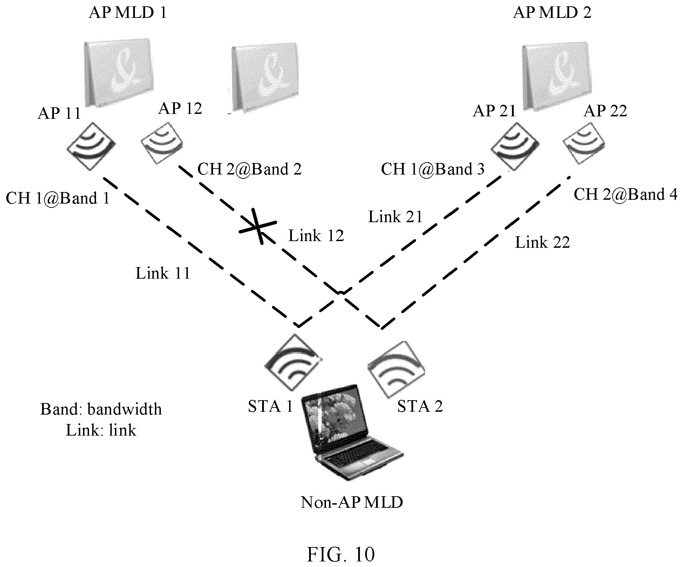

Example 1: FIG. 10 is a schematic diagram of switching an AP MLD by a non-AP MLD in a roaming process according to an embodiment of this application. As shown in FIG. 10, STA 2@Non-AP MLD represents the STA 2 of the non-AP MLD; CH represents a channel (channel); and CH 1@Band 1 represents a channel 1 on a band 1. A process in which the non-AP MLD switches the AP MLD in the roaming process includes but is not limited to the following steps.

Step 1: The non-AP MLD sends link state indication information to the AP MLD 1. The link state indication information indicates that a state of a link 12 (link 12) is disconnected (or disabled).

The link state indication information may carry a link identifier (link ID) corresponding to the link 12, and the notification information may further indicate that the state of the link 12 is disabled.

Optionally, the link state indication information may further carry a reason code (Reason Code) field to indicate a reason why the state of the link 12 is disabled. It may be understood that a reason why a state of a link is disconnected (or disabled) may be power saving (power save), a low received signal strength indication (Low received signal strength indication, Low RSSI), a tentative association (tentative association), or the like. It may be further understood that, in this embodiment of this application, the reason code (Reason Code) field carried in the link state indication information may be set to the tentative association (tentative association).

Optionally, the link state indication information may be sent over a link 11 (link 11), or may be sent by using the link 12. This is not limited in this embodiment of this application. It may be understood that regardless of a link over which the link state indication information is sent, information carried in the link state indication information does not change.

Step 2: The STA 2 of the non-AP MLD (namely, STA 2@Non-AP MLD) switches to a channel 2 of a band 4 (namely, CH 2@Band 4), and initiates a multi-link tentative association with the AP MLD 2.

Specifically, STA 2@Non-AP MLD switches to a link 22 (link 22) to start BSS transition, first performs an 802.11 open authentication process with the AP MLD 2, and then sends a multi-link reassociation request (multi-link reassociation request) frame. The multi-link reassociation request frame may carry tentative association indication information, and the tentative reassociation indication information may indicate whether a type of this reassociation operation is a tentative association, or indicates whether a type of an association operation requested by using the multi-link reassociation request frame is tentative association. The tentative association indication information may be carried in a common information (common information) field of a multi-link aggregation (multi-link aggregation, MLA) element (MLA element) in the multi-link reassociation request frame.

Optionally, the multi-link reassociation request frame may further indicate that a state of a link 21 (link 21) is disabled. This is because the STA 1 (namely, STA 1@Non-AP MLD) of non-AP MLD is not disconnected from the AP MLD 1, in other words, a state of the link 11 between the STA 1 and the AP 11 is enabled. Further optionally, the multi-link reassociation request frame may further carry a reason code field to indicate a reason why the state of the link 21 is disabled. The reason code field herein may be set to "association with an old AP MLD (Association with old AP MLD)".

Optionally, when performing reassociation or multi-link tentative reassociation with the AP MLD 2, the non-AP MLD may use a new SAP MAC address of the non-AP MLD. Specifically, the non-AP MLD includes both the new SAP MAC address and an old SAP MAC address of the non-AP MLD in the multi-link reassociation request frame. The old SAP MAC address of the non-AP MLD may be used by the AP MLD 2 to retrieve, from the AP MLD 1, a data packet that has not been completely transmitted.

It may be understood that the old SAP MAC address of the non-AP MLD may refer to a SAP MAC address used when the non-AP MLD is associated with the AP MLD 1.

It may be understood that, because the non-AP MLD uses the new SAP MAC address to perform multi-link tentative reassociation with the AP MLD 2, the non-AP MLD needs to perform 802.1X authentication again.

Step 3: The AP MLD 2 returns a multi-link reassociation response (multi-link association response) frame to the STA 2 of the non-AP MLD over the link 22.

If the multi-link reassociation response frame indicates that the non-AP MLD is successfully associated with the AP MLD 2, the non-AP MLD may perform a negotiation interaction operation such as BA agreement setup with the AP MLD 2. The AP MLD 2 cannot send DS-STA-Notify.request primitive to notify the distribution system to update STA-AP mapping information.

Step 4: The non-AP MLD sends a STA-AP mapping notify frame to the AP MLD 2 at a specific moment, to trigger the AP MLD 2 to send the DS-STA-Notify.request primitive to notify the DS to update the STA-AP mapping information.

A specific time when the non-AP MLD sends the STA-AP mapping notify frame may be determined based on various factors. For example, the STA-AP mapping notify frame is sent when an association between the non-AP MLD and the AP MLD 2 is better than an association between the non-AP MLD and the AP MLD 1.

Step 5: The AP MLD 2 returns an acknowledgment frame to the non-AP MLD, and sends the DS-STA-Notify.request primitive to notify the DS to update the STA-AP mapping information.

In this embodiment of this application, the DS-STA-Notify.request primitive carries the service access point (service access point, SAP) MAC address of the non-AP MLD, and an update type carried in the DS-STA-Notify.request primitive is MOVE.

Optionally, after sending the DS-STA-Notify.request primitive to notify the DS to update the STA-AP mapping information, the AP MLD 2 may obtain, from the AP MLD 1, data that has not been completely transmitted to the non-AP MLD.

Step 6: The STA 1 (namely, STA 1@Non-AP MLD) of the non-AP MLD sends a multi-link disassociation (multi-link disassociation) frame to the AP MLD 1, and then switches to a channel 1 of a band 3 (namely, CH 1@Band 3) to exchange data with the AP 21 (namely, AP 21@AP MLD 2) of the AP MLD 2.

Specifically, the non-AP MLD notifies the AP MLD 2, in two manners, that the state of the link 21 (link 21) changes to enabled, where the two manners include an implicit notification and an explicit notification. The implicit notification is as follows: If the non-AP MLD has uplink data to be transmitted, the non-AP MLD may directly send the uplink data over the link 21 (link 21), and implicitly notify, by using the uplink data on the link 21, the AP MLD 2 that the state of the link 21 has changed to enabled. The explicit notification is as follows: If the non-AP MLD has no uplink data to transmit, the non-AP MLD may send a QoS null frame to the AP MLD 2, to notify the AP MLD 2 that the state of the link 21 has changed to enabled. Alternatively, an A-control field in a data frame sent over the link 22 carries a link identifier and state information of the link 21, to notify the AP MLD 2.

Optionally, the STA 1 of the non-AP MLD may set a time value. If a time during which no data is transmitted between the first AP MLD 1 and the non-AP MLD when a channel is in an idle state exceeds the time value, the STA 1 of the non-AP MLD may actively send the multi-link disassociation frame to the AP MLD 1.

Optionally, one time value is carried when the non-AP MLD is associated with the AP MLD 1. If a time during which no data is transmitted between the first AP MLD 1 and the non-AP MLD when a channel is in an idle state exceeds the time value, the non-AP MLD automatically disconnects a link and does not need to send the multi-link disassociation frame to the AP MLD 1.

Optionally, when the non-AP MLD receives the acknowledgment frame (ACK frame) returned by the AP MLD 2 in response to a key message 4, the STA 1 of the non-AP MLD may send the multi-link disassociation frame to the AP MLD 1.

It may be understood that, in actual application, the process in which the non-AP MLD switches the AP MLD in the roaming process may have less or more steps than steps shown in FIG. 10. This is not limited in this embodiment of this application.

In this embodiment of this application, the non-AP MLD disconnects one or a part of links from a currently associated AP MLD (namely, the AP MLD 1), and then performs multi-link association with a new target AP MLD (namely, the AP MLD 2) by using a STA whose link state is disconnected. After PTK and GTK derivation through 4-way handshake is completed, the target AP MLD (namely, the AP MLD 2) sends the DS-STA-Notify.request primitive to notify the DS to update the STA-AP mapping information, and retrieves the data that has not been transmitted completely to the non-AP MLD from the previously associated AP MLD (namely, the AP MLD 1). In this way, an interruption time of data transmission can be reduced, and ideally, data transmission is not interrupted. In other words, there is always an available link for data transmission at any moment.

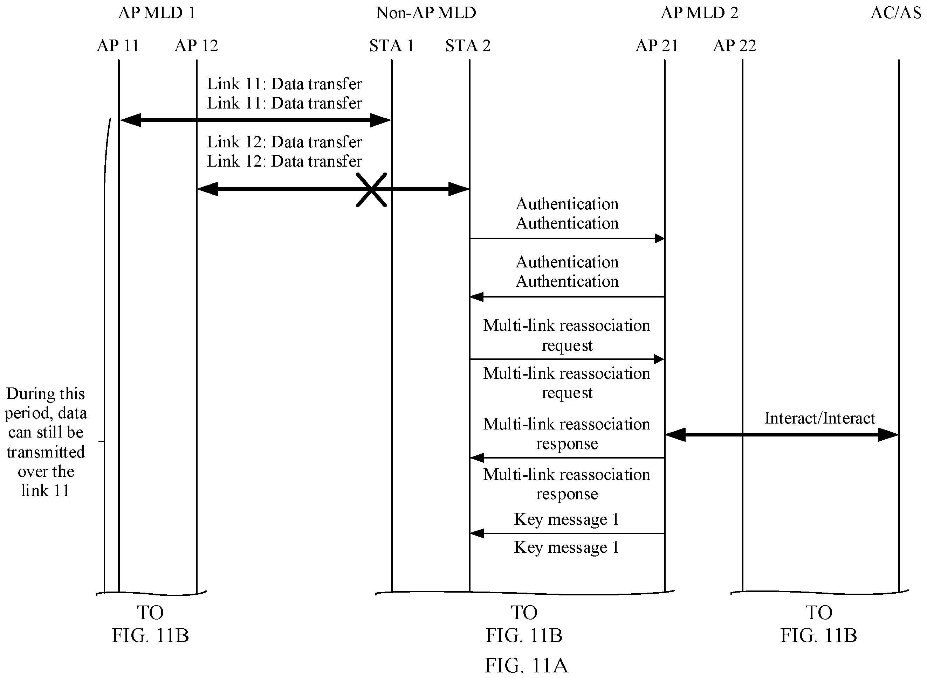

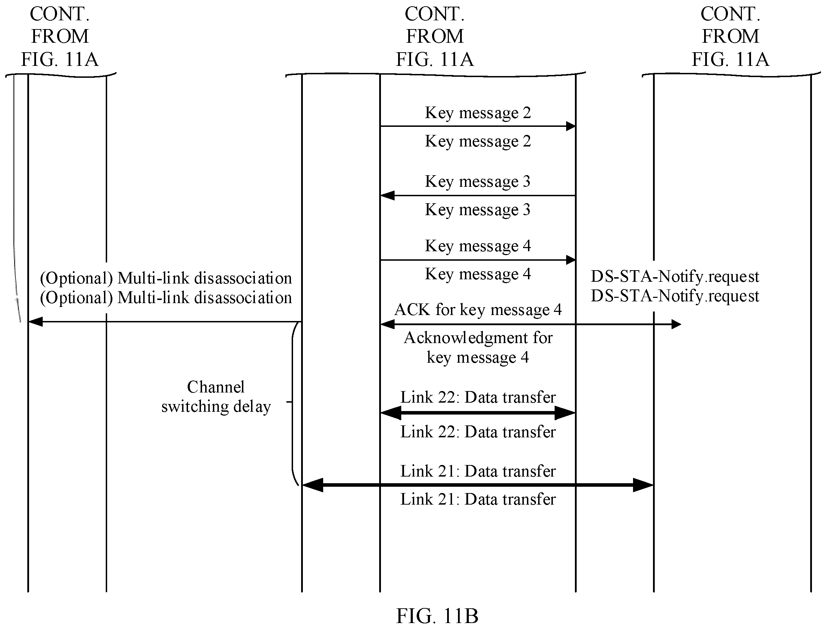

Example 2: FIG. 11A and FIG. 11B are a schematic diagram of signaling interaction of switching an AP MLD by a non-AP MLD in a roaming process according to an embodiment of this application. A process of switching the AP MLD in the roaming process of the non-AP MLD in FIG. 11A and FIG. 11B may not include step 4 in FIG. 10, to be specific, the STA 2 of the non-AP MLD does not need to send the STA-AP mapping notify frame to the AP MLD 2 to trigger the AP MLD 2 to send the DS-STA-Notify.request primitive. In this embodiment of this application, the AP MLD 2 is restricted to directly send the DS-STA-Notify.request primitive to the DS after receiving the key message 4, so that the DS updates the STA-AP mapping information.

Optionally, after receiving the ACK frame returned by the AP MLD 2 in response to the key message 4, the non-AP MLD may immediately send the multi-link disassociation frame to the AP MLD 1, then switch to a channel of a link corresponding to the AP MLD 2, and notify the AP MLD 2 that a state of the link changes to enabled. Optionally, after the non-AP MLD receives the ACK frame returned by the AP MLD 2 for the key message 4, if a time during which no data is transmitted between the AP MLD 1 and the non-AP MLD when a channel is in an idle channel state a specific value, the non-AP MLD actively sends the multi-link disassociation frame to the AP MLD 1, switches to a channel of a link corresponding to the AP MLD 2, and notifies the AP MLD 2 that a state of the link changes to enabled.

It may be understood that, it can be learned from a signaling interaction process shown in FIG. 11A and FIG. 11B that data transmission of the non-AP MLD is not interrupted in the entire roaming process. In other words, there is always an available link for data transmission of the non-AP MLD at any moment.

In the embodiment 1 of this application, the tentative association is introduced in an association/reassociation process of a multi-link device to implement uninterrupted data transmission. Therefore, in different states, types of frames that are allowed to be transmitted between a non-AP MLD and an AP MLD also need to be redefined.

FIG. 12a-1 and FIG. 12a-2 are a schematic diagram of a switching relationship between different states and types of frames allowed to be sent in different states according to an embodiment of this application. As shown in FIG. 12a-1 and FIG. 12a-2, a state (State) 5 is a newly added state in this embodiment of this application. In the state 5, frames that are allowed to be transmitted (or data services that are allowed to be provided) include data frames, control frames, or management frames in a frame type 1, a frame type 2, a frame type 3, and a frame type 4. Various frames in the frame type 1 and the frame type 2 are the same as those in an existing protocol. The data frame in the frame type 3 may refer to a data frame, between stations. with an Ethernet type not equal to 0X0800 or 0X86dd in an infrastructure BSS or in a mesh BSS (Data frames between STAs with Ethernet_Type not equal to 0X0800 or 0X86dd in an infrastructure BSS or in an MBSS). The frame type 4 may refer to a data frame with an Ethernet type equal to 0X0800 (Data frame with Ethernet_Type=0x0800 or 0X86dd). Another manner of defining the frame type 3 and the frame type 4 is as follows: The frame type 3 may mean that an address 3 in a MAC frame header is a BSSID of a currently associated AP; and the frame type 4 may mean that the address 3 in the MAC frame header is a MAC address of a BSSID of an AP that is not currently associated. It may be understood that, before the AP MLD sends the DS-STA-Notify.request primitive, in this embodiment of this application, only various frames in the frame types 1, 2, and 3 are allowed to be transmitted. In this embodiment of this application, any frames such as various frames in the frame types 1, 2, 3, and 4 are allowed to be transmitted only after the AP MLD sends the DS-STA-Notify.request primitive or the non-AP MLD sends the STA-AP mapping notify frame. In other words, the non-AP MLD is allowed to communicate directly with the DS only after the AP MLD sends the DS-STA-Notify.request primitive, but previously, the non-AP MLD is allowed to communicate with the DS only in proxy mode by using the AP MLD.

FIG. 12b is another schematic diagram of a switching relationship between different states and types of frames allowed to be sent in different states according to an embodiment of this application. As shown in FIG. 12b, no new state is added in this embodiment of this application. In a state 4, data frames, control frames, or management frames in a frame type 1, a frame type 2, a frame type 3, and a frame type 4 are allowed to be transmitted. It can be learned from FIG. 12b that, in a process in which a state 3 changes to the state 4, the STA MLD and the AP MLD have successfully performed PTK and GTK derivation through 4-way handshake, and triggered the AP MLD to send the DS-STA-Notify.request primitive. Therefore, in this embodiment of this application, a condition for changing the state 3 to the state 4 is changed, to adapt to the multi-link association tentative method in the embodiment 1 of this application.

### Embodiment 2

An embodiment of this application further provides an initial association method for a multi-link device. In the initial association method, a non-AP MLD initiates a tentative association to multiple AP MLDs (or APs) simultaneously by using multiple radios, and then selects an optimal AP MLD (or AP) for association based on an association status. This can improve an association success rate of the non-AP MLD in an initial association process, and improve an association speed.

It may be understood that the embodiment 2 of this application may be independently applied to an initial association scenario between a non-AP MLD and an AP MLD, or may be jointly applied with reference to the embodiment 1. This is not limited in this embodiment of this application.

The following describes the initial association method provided in this embodiment of this application from a perspective of interaction between the non-AP MLD and the AP MLD.

In an example, refer to FIG. 13a. FIG. 13a is a schematic interaction diagram of a non-AP MLD and an AP MLD in an initial association process according to an embodiment of this application. As shown in FIG. 13a, three AP MLDs and one non-AP MLD are used as an example to describe the initial association method provided in this embodiment of this application. Specifically, the initial association method includes: (1) The non-AP MLD initiates an association to an AP MLD (an AP MLD 1 in FIG. 13a) over a link (a link 1 in FIG. 13a), indicates that other links between the non-AP MLD and the AP MLD 1 are in a disabled state, and then performs 802.1X authentication to obtain a PMK. (2) The non-AP MLD uses the multiple remaining links (a link 2 and a link 3 in FIG. 13a) to send multi-link reassociation request (Multi-link Re-association Request) frames on different channels, to initiate tentative associations with multiple other AP MLDs (an AP MLD 2 and an AP MLD 3 in FIG. 13a), and indicates, in the reassociation request frames, that the other links are in the disabled state. (3) The non-AP MLD determines a target AP MLD based on whether the associations are successful, capabilities of the AP MLDs (for example, the AP MLD 1, the AP MLD 2, and the AP MLD 3 in FIG. 13a), and quality of links between the non-AP MLD and the AP MLDs, in other words, determines the AP MLD with which the non-AP MLD is to be finally associated, and then performs key (namely, a PTK and/or a GTK) derivation.

Optionally, the non-AP MLD may send a newly defined frame to trigger PTK and GTK derivation through 4-way handshake with the target AP MLD.

It may be understood that, in an interaction process of the non-AP MLD and the AP MLDs shown in FIG. 13a, the non-AP MLD needs to perform 802.1X authentication only once, and does not need to perform 802.1X authentication with the multiple AP MLDs for multiple times. This can reduce an association delay of the non-AP MLD in an initial association process, and improve an association speed.

In another example, refer to FIG. 13b. FIG. 13b is another schematic interaction diagram of a non-AP MLD and an AP MLD in an initial association process according to an embodiment of this application. As shown in FIG. 13b, three AP MLDs and one non-AP MLD are used as an example to describe the initial association method provided in this embodiment of this application. Specifically, the initial association method includes: (a) The non-AP MLD sends multi-link association request (Multi-link Association Request) frames over multiple links (for example, a link 1, a link 2, and a link 3 in FIG. 13b), initiates tentative associations with multiple AP MLDs (for example, an AP MLD 1, an AP MLD 2, and an AP MLD 3 in FIG. 13b), and indicates, in the association request frames, that another link is in a disabled state. (b) The non-AP MLD determines a target AP MLD based on whether the associations are successful, capabilities of the AP MLDs, and quality of links between the non-AP MLD and the AP MLDs, in other words, determines the AP MLD with which the non-AP MLD is to be finally associated. (c) The non-AP MLD sends an EAP-Start frame to trigger processes of 802.1X authentication and PTK and GTK derivation through 4-way handshake with the target AP MLD.

It may be understood that, because the EAP-Start frame is optional, in this manner, the target AP MLD cannot actively initiate 802.1X authentication.

It may be understood that, in an interaction process of the non-AP MLD and the AP MLD shown in FIG. 13b, the non-AP MLD directly initiates the tentative associations with the multiple AP MLDs simultaneously, and after receiving a multi-link association response frame, selects one AP MLD from the multiple AP MLDs to perform processes such as 802.1X authentication and PTK and GTK derivation through 4-way handshake. This can improve an association success rate of the non-AP MLD in the initial association process, and improve an association speed by initiating tentative associations in parallel (simultaneously).

In still another example, refer to FIG. 13c. FIG. 13c is still another schematic interaction diagram of a non-AP MLD and an AP MLD in an initial association process according to an embodiment of this application. As shown in FIG. 13c, three AP MLDs and one non-AP MLD are used as an example to describe the initial association method provided in this embodiment of this application. Specifically, the initial association method includes: (A) The non-AP MLD sends multi-link association request frames over multiple links (for example, a link 1, a link 2, and a link 3 in FIG. 13c), initiates tentative associations with multiple AP MLDs (for example, an AP MLD 1, an AP MLD 2, and an AP MLD 3 in FIG. 13c), indicates, in the association request frames, that another link is in a disabled state, and then performs processes such as 802.1X authentication and PTK and GTK derivation through 4-way handshake with each AP MLD. (B) The non-AP MLD determines a target AP MLD based on whether the associations are successful, capabilities of the AP MLDs, and quality of links between the non-AP MLD and the AP MLDs, in other words, determines the AP MLD with which the non-AP MLD is to be finally associated. (C) The non-AP MLD sends a STA-AP mapping notify frame, to trigger the target AP MLD to send DS-STA-Notify.request primitive to notify the distribution system of the corresponding STA-AP mapping information.

It may be understood that, in an interaction process of the non-AP MLD and the AP MLDs shown in FIG. 13c, the non-AP MLD directly initiates the tentative associations with multiple AP MLDs simultaneously, and performs processes such as 802.1X authentication and PTK and GTK derivation through 4-way handshake with each AP. The non-AP MLD finally selects one AP MLD from the multiple AP MLDs, and sends the STA-AP mapping notify frame to the AP MLD, to trigger the target AP MLD to send the DS-STA-Notify.request primitive. This can improve an association success rate of the non-AP MLD in the initial association process.

### Embodiment 3

An embodiment of this application further provides an association method applied to a non co-located (non co-located) multi-link device in a roaming scenario of a non-AP MLD. The following describes, with reference to an optimal association scenario of the non-AP MLD, the association method for the non co-located multi-link device provided in this embodiment of this application. For ease of description, it is assumed below that the non-AP MLD includes two STAs, a STA 1 and a STA 2, and an AP MLD includes two APs, an AP 1 and an AP 2. One link or AP of the AP MLD may work in a 2.4 GHz band, and another link or AP may work in a 5 GHz band. It may be understood that, in actual application, the non-AP MLD may include more than two STAs, and the AP MLD may include more than two APs. If the non-AP MLD includes more than two STAs and the AP MLD includes more than two APs, refer to descriptions of the two STAs and the two APs in this embodiment of this application. Details are not described herein again.

FIG. 14 is a schematic diagram of an optimal association scenario in a movement process of a non- AP MLD according to an embodiment of this application. As shown in FIG. 14, when the non-AP MLD stays in an area 1, two STAs of the non-AP MLD associate with two APs of an AP MLD 1. When the non-AP MLD moves from an area 1 to the area 2 and stays in the area 2, the two STAs of non-AP MLD may respectively associate with APs working on a 2.4 GHz band in the AP MLD 1 and an AP MLD 2, and set up a non co-located MLD 3. The non co-located MLD 3 includes the APs working on the 2.4 GHz band in the AP MLD 1 and the AP MLD 2. When the non-AP MLD moves from the area 2 to an area 3 and stays in the area 3, the two STAs of the non-AP MLD associate with two APs of the AP MLD 2.

In the optimal association scenario shown in FIG. 14, further refer to FIG. 15. FIG. 15 is a schematic flowchart of an association method for a non co-located multi-link device according to an embodiment of this application. As shown in FIG. 15, the association method for the non co-located multi-link device includes but is not limited to the following steps.

S201: The non-AP MLD sends a multi-link association request frame to the AP MLD 2.

S202: The AP MLD 2 sends a multi-link setup request (MLD setup request) to the AP MLD 1.

S203: The AP MLD 1 returns a multi-link setup response (MLD setup response) to the AP MLD 2.

S204: The AP MLD 2 returns a multi-link association response frame to the non-AP MLD.

Optionally, to better understand the association method for the non co-located multi-link device provided in this embodiment of this application, the following provides description from a perspective of interaction between the non-AP MLD and an AP MLD. FIG. 16 is a schematic interaction diagram of a non-AP MLD and an AP MLD according to an embodiment of this application. As shown in FIG. 16, the AP MLD 1 includes an AP 11 and an AP 12, the AP MLD 2 includes an AP 21 and an AP 22, and the non-AP MLD includes a STA 1 and a STA 2. The AP 11 and the AP 22 may work on a 5 GHz band, and the AP 12 and the AP 22 may work on a 2.4 GHz band. CH 1@2.4 GHz represents a channel 1 on the 2.4 GHz band, and CH 1@5 GHz represents a channel 1 on the 5 GHz band. Similarly, CH 2@2.4 GHz represents a channel 2 on the 2.4 GHz band, and CH 2@5 GHz represents a channel 2 on the 5 GHz band. As shown in FIG. 16, after the non-AP MLD indicates that a state of a link (a link 11) between the STA 1 and the AP 11 is disabled or the non-AP MLD disconnects a link (a link 11) between the STA 1 and the AP 11, the STA 1 of the non-AP MLD sends a multi-link association request to the AP MLD 2. The AP 22 of the AP MLD 2 sends an MLD setup request to the AP 12 of the AP MLD 1, to request to set up a non co-located MLD 3. The AP 12 of the AP MLD 1 returns an MLD setup response to the AP 22 of the AP MLD 2 in response to the MLD setup request. The AP MLD 2 returns a multi-link association response to the STA 1 of the non-AP MLD in response to the multi-link association request.

Optionally, the MLD setup response responds to the MLD setup request in a manner of agreeing or rejecting. If the MLD setup response indicates to agree to set up a non co-located MLD 3, the AP 22 and the AP 12 may share a high MAC layer. In other words, the AP 22 and the AP 12 form a new logical multi-link device (namely, the non co-located MLD 3). In a subsequent configuration process and the like, a unified sequence number, PTK, and the like may be allocated to the AP 22 and the AP 12. It may be understood that, in this scenario, the non-AP MLD may be considered as switching from the AP MLD 1 to the non co-located MLD 3.

For implementations of step S201 and step S204 in this embodiment of this application, refer to implementations of step S101 and step S 102 in the embodiment 1 of this application. Details are not described herein again.

Optionally, the multi-link setup request may carry the following information: related information of the STA 1 of the non-AP MLD and related information of the non co-located MLD 3. The multi-link setup response may carry the following information: a status code (Status code) and the related information of the non co-located MLD 3. It may be understood that the AP 22 and the AP 11 negotiate the related information of the non co-located MLD 3 by using the multi-link setup request and the multi-link setup response. The related information of the STA 1 may include a SAP MAC address of the STA 1, a MAC address indication of the STA 1, an anchor chain (Anchor link) indication, and the like. The related information of the non co-located MLD 3 may include a SAP MAC address of the non co-located MLD 3, link information corresponding to the AP 22 of the AP MLD 2, and link information corresponding to the AP 12 of the AP MLD 1.

In the multi-link setup request, the link information corresponding to the AP 22 of the AP MLD 2 may include a link identifier (Link ID), an operating class (Operating class), a channel number (Channel number), a basic service set identifier (BSSID), and other related information of the AP 22. The link information corresponding to the AP 12 of the AP MLD 1 may include a link ID, an operating class, a channel number, a BSSID, and the like. In the multi-link setup response, the link information corresponding to the AP 22 of the AP MLD 2 may include the link ID, the operating class, the channel number, the BSSID, and the like. The link information corresponding to the AP 12 of the AP MLD 1 may include the link ID, the operating class, the channel number, the BSSID, and other related information of the AP 12.

In this embodiment of this application, in a tentative association process between the non-AP MLD and the AP MLD 2, the non co-located MLD 3 is set up by using the multi-link setup request and response, to implement association between the non-AP MLD and the non co-located MLD 3. This can provide an association method in an optimal association scenario.

The foregoing description describes in detail the methods provided in this application. To better implement the foregoing solutions in embodiments of this application, embodiments of this application further provide corresponding apparatuses or devices.

In embodiments of this application, a station multi-link device or an access point multi-link device may be divided into functional modules based on the foregoing method examples. For example, the functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

When an integrated unit is used, FIG. 17 is a schematic diagram of a structure of a communication apparatus according to an embodiment of this application. The communication apparatus 1 may be a non-AP MLD or a chip in a non-AP MLD, for example, a Wi-Fi chip. As shown in FIG. 17, the communication apparatus 1 includes a processing unit 11 and a transceiver unit 12.

The processing unit 11 is configured to generate a multi-link association request frame. The transceiver unit 12 is configured to send the multi-link association request frame to one or more second AP MLDs, where the multi-link association request frame is used for initiating a multi-link tentative association between a non-AP MLD and the one or more second AP MLDs. The transceiver unit 12 is further configured to: if the multi-link tentative association between the non-AP MLD and the one or more second AP MLDs succeeds, send indication information to a target AP MLD, to trigger the target AP MLD to update a mapping relationship between a station and an access point, and the target AP MLD is a second AP MLD determined from the one or more second AP MLDs.

In a possible design, the transceiver unit 12 is further configured to send link state indication information to the first AP MLD, where the link state indication information indicates that a state of a link between one or more first STAs of the non-AP MLD and the first AP MLD is disconnected.

The communication apparatus 1 in this embodiment of this application has any function of the non-AP MLD in the foregoing method. Details are not described herein again.

FIG. 18 is a schematic diagram of another structure of a communication apparatus according to an embodiment of this application. The communication apparatus 2 may be a target AP MLD or a chip in the target AP MLD, for example, a Wi-Fi chip. As shown in FIG. 18, the communication apparatus 2 includes a transceiver unit 21 and a processing unit 22.

The transceiver unit 21 is configured to receive a multi-link association request frame from a non-AP MLD, where the multi-link association request frame is used for requesting the non-AP MLD to perform multi-link tentative association with the target AP MLD. The transceiver unit 21 is further configured to: if a multi-link association response frame returned by the target AP MLD indicates that the association succeeds, receive indication information from the non-AP MLD, where the indication information is used for triggering the target AP MLD to update a mapping relationship between a station and an access point. The processing unit 22 is configured to generate mapping information between the station and the access point. The transceiver unit 21 is further configured to send mapping information between the station and the access point, where the mapping information between the station and the access point indicates that the mapping relationship between the station and the access point is updated from an association between the non-AP MLD and a first AP MLD to an association between the non-AP MLD and the target AP MLD.

The communication apparatus 2 in this embodiment of this application has any function of the target AP MLD in the foregoing method. Details are not described herein again.

The foregoing describes the non-AP MLD and the target AP MLD in this embodiment of this application. The following describes possible product forms of the non-AP MLD and the target AP MLD. It should be further understood that the following description is merely an example, and product forms of the non-AP MLD and the target AP MLD in this embodiment of this application are not limited thereto.

In a possible product form, the non-AP MLD and the target AP MLD in this embodiment of this application may be implemented by using a general bus architecture.

The non-AP MLD includes a processor and a transceiver internally connected to and communicating with the processor. The processor is configured to generate a multi-link association request frame. The transceiver is configured to send the multi-link association request frame to one or more second AP MLDs, where the multi-link association request frame is used for initiating a multi-link tentative association between a non-AP MLD and the one or more second AP MLDs. The transceiver is further configured to: if the multi-link tentative association between the non-AP MLD and the one or more second AP MLDs succeeds, send indication information to a target AP MLD, to trigger the target AP MLD to update a mapping relationship between a station and an access point, and the target AP MLD is a second AP MLD determined from the one or more second AP MLDs. Optionally, the non-AP MLD may further include a memory, and the memory is configured to store instructions executed by the processor.

The target AP MLD includes a processor and a transceiver internally connected to and communicating with the processor. The transceiver is configured to receive a multi-link association request frame from a non-AP MLD, where the multi-link association request frame is used for requesting the non-AP MLD to perform multi-link tentative association with the target AP MLD. The transceiver is further configured to: if a multi-link association response frame returned by the target AP MLD indicates that the association succeeds, receive indication information from the non-AP MLD, where the indication information is used for triggering the target AP MLD to update a mapping relationship between a station and an access point. The processor is configured to generate mapping information between the station and the access point. The transceiver is further configured to send mapping information between the station and the access point, where the mapping information between the station and the access point indicates that the mapping relationship between the station and the access point is updated from an association between the non-AP MLD and a first AP MLD to an association between the non-AP MLD and the target AP MLD. Optionally, the target AP MLD may further include a memory, and the memory is configured to store instructions executed by the processor.

In a possible product form, the non-AP MLD and the target AP MLD in this embodiment of this application may be implemented by a general-purpose processor.

The general-purpose processor for implementing the non-AP MLD includes a processing circuit and an input/output interface internally connected to and communicating with the processing circuit. The processing circuit is configured to generate a multi-link association request frame. The input/output interface is configured to send the multi-link association request frame to one or more second AP MLDs, where the multi-link association request frame is used for initiating a multi-link tentative association between a non-AP MLD and the one or more second AP MLDs. The input/output interface is further configured to: if the multi-link tentative association between the non-AP MLD and the one or more second AP MLDs succeeds, send indication information to a target AP MLD, to trigger the target AP MLD to update a mapping relationship between a station and an access point, and the target AP MLD is a second AP MLD determined from the one or more second AP MLDs. Optionally, the general-purpose processor may further include a storage medium. The storage medium is configured to store instructions executed by the processing circuit.

The general-purpose processor for implementing the target AP MLD includes a processing circuit and an input/output interface internally connected to and communicating with the processing circuit. The input/output interface is configured to receive a multi-link association request frame from a non-AP MLD, where the multi-link association request frame is used for requesting the non-AP MLD to perform multi-link tentative association with the target AP MLD. The input/output interface is further configured to: if a multi-link association response frame returned by the target AP MLD indicates that the association succeeds, receive indication information from the non-AP MLD, where the indication information is used for triggering the target AP MLD to update a mapping relationship between a station and an access point. The processing circuit is configured to generate mapping information between the station and the access point. The input/output interface is further configured to send mapping information between the station and the access point, where the mapping information between the station and the access point indicates that the mapping relationship between the station and the access point is updated from an association between the non-AP MLD and a first AP MLD to an association between the non-AP MLD and the target AP MLD. Optionally, the general-purpose processor may further include a storage medium. The storage medium is configured to store instructions executed by the processing circuit.

As a possible product form, the non-AP MLD or the target AP MLD described in this embodiment of this application may further be implemented by using the following components: one or more FPGAs (field programmable gate arrays), a PLD (programmable logic device), a controller, a state machine, gate logic, a discrete hardware component, any other suitable circuit, or any combination of circuits that can perform various functions described in this application.

It should be understood that the sequence generation apparatuses in the foregoing various product forms have any function of the non-AP MLD in the foregoing method embodiment, and details are not described herein again; and the sequence receiving apparatuses in the foregoing various product forms have any function of the AP MLDs in the foregoing method embodiments, and details are not described herein again.

An embodiment of this application further provides a computer-readable storage medium. The computer-readable storage medium stores computer program code. When the processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in any one of the foregoing embodiments.

An embodiment of this application further provides a wireless communication system, including at least one station multi-link device and at least two access point multi-link devices. The station multi-link device and the access point multi-link device may perform the method in any one of the foregoing embodiments.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that facilitates transmission of a computer program from one place to another place. The storage medium may be any available medium accessible to a general-purpose or a dedicated computer.

## Claims

1. A multi-link tentative association method, comprising:
generating, by a non-access point, non-AF, multi-link device, MLD (300), a multi-link association request frame;
sending (S101), by one or more first STAs of the non-AP MLD (300), the multi-link association request frame to one or more second AP MLDs (200), wherein the multi-link association request frame is used for requesting the non-AP MLD to perform a multi-link tentative association with the one or more second AP MLDs, and for each of the one or more first STAs, a state of a link between the respective first STA and a first AP MLD (100) is disconnected, and a state of a link between a second STA of the non-AP MLD and the first AP MLD is connected; and
if the multi-link tentative association between the non-AP MLD (300) and the one or more second AP MLDs (200) succeeds, sending (S105), by the non-AP MLD, indication information to a target AP MLD (200), wherein the indication information is used for triggering the target AP MLD to update, in a distribution system, a STA-AP mapping relationship from an association between the non-AP **MLD and** the first AP MLD (100) to an association between the non-AP MLD and the target AP MLD, and the target AP MLD is a second AP MLD determined from the one or more second AP MLDs; and
wherein the multi-link association request frame comprises a link state of a non-transmitted link between the non-AP MLD (300) and the second AP MLD and wherein said non-transmitted link is different from a link on which the multi-link association request frame is exchanged.

2. A multi-link tentative association method, comprising:
receiving (S101), by a target access point, AP, multi-link device, MLD (200), a multi-link association request frame from a non-AP MLD (300),
wherein the multi-link association request frame is used for requesting the non-AP MLD to perform multi-link tentative association with the target AP MLD; and
if the multi-link tentative association between the target AP MLD (200) and the non-AP MLD (300) succeeds, receiving (S105), by the target AP MLD, indication information from the non-AP MLD, wherein the indication information is used for triggering the target AP MLD to update, in a distribution system, a STA-AP mapping relationship from an association between the non-AP MLD and a first AP MLD (100) to an association between the non-AP MLD and the target AP MLD;
generating, by the target AP MLD (200), STA-AP mapping information, wherein the STA-AP mapping information indicates that the STA-AP mapping relationship is to-be-updated from the association between the non-AP MLD (300) and the first AP MLD (100) to the association between the non-AP MLD and the target AP MLD; and
sending, by the target AP MLD (200), the STA-AP mapping information to the distribution system;
wherein the multi-link association request frame comprises a link state of a non-transmitted link between the non-AP MLD (300) and the target AP MLD and wherein said non-transmitted link is different from a link on which the multi-link association request frame is exchanged.

3. The method according to claim 2, wherein the STA-AP mapping information comprises a service access point SAP media access control MAC address of the non-AP MLD (300) and a SAP MAC address of the target AP MLD (200).

4. The method according to any one of claims 1 to 3, wherein the indication information is carried in an A-control field.

5. The method according to any one of claims 1 to 4, wherein the indication information is carried in a notification frame.

6. The method according to any one of claim 1 and claims 4 or 5 when depending on claim 1, wherein the multi-link association request frame further comprises a reason code field, and the reason code field indicates a reason why a state of a link between the second STA of the non-AP MLD (300) and the second AP MLD is disconnected.

7. The method according to any one of claims 1 to 6, wherein the multi-link association request frame further comprises tentative association indication information, and the tentative association indication information indicates whether to perform multi-link tentative association.

8. The method according to claim 7, wherein the multi-link association request frame further comprises tentative association lifetime information, and the tentative association lifetime information indicates a lifetime of the multi-link tentative association.

9. The method according to claim 8, wherein the tentative association indication information and the tentative association lifetime information are carried in a common information field of a multi-link aggregation MLA element.

10. The method according to any one of claim 1 and claims 4 to 9 when depending on claim 1, wherein before the sending, by one or more first STAs of the non-AP MLD (300), the multi-link association request frame to one or more second AP MLDs (200), the method further comprises:
sending, by the non-AP MLD (300), link state indication information to the first AP MLD (100), wherein the link state indication information indicates that the state of the link between the one or more first STAs of the non-AP MLD (300) and the first AP MLD is disconnected.

11. A communication apparatus, configured to implement the method according to any one of claims 1, or 4 to 10 when dependent on claim 1.

12. A communication apparatus, configured to implement the method according to any one of claims 2-3 or any one of claims 4-5 or 7-9 when dependent on claim 2.

13. A computer program, wherein when the computer program is executed by the communication apparatus of claim 11, the method according to any one of claims 1, or 4 to 10 when dependent on claim 1 is implemented.

14. A computer program, wherein when the computer program is executed by the communication apparatus of claim 12, the method according to any one of claims 2-3 or any one of claims 4-5 or 7-9 when dependent on claim 2 is implemented.

15. A computer-readable storage medium storing the computer program of claim 13 or the computer program of claim 14.

## Patentansprüche

1. Provisorisches Zuordnungsverfahren mit mehreren Verknüpfungen, umfassend:
Erzeugen, durch eine Nicht-Zugriffspunktvorrichtung mit mehreren Verknüpfungen, Nicht-AF-MLD (300), eines Zuordnungsanforderungsrahmens mit mehreren Verknüpfungen;
Senden (S101), durch eine oder mehrere erste STAs der Nicht-AP-MLD (300), des Zuordnungsanforderungsrahmens mit mehreren Verknüpfungen an eine oder mehrere zweite AP-MLDs (200), wobei der Zuordnungsanforderungsrahmen mit mehreren Verknüpfungen zum Auffordern der Nicht-AP-MLD verwendet wird, eine provisorische Zuordnung mit mehreren Verknüpfungen mit der einen oder den mehreren zweiten AP-MLDs durchzuführen, und für jede der einen oder der mehreren ersten STAs ein Zustand einer Verknüpfung zwischen der jeweiligen ersten STA und einer ersten AP-MLD (100) getrennt ist und ein Zustand einer Verknüpfung zwischen einer zweiten STA der Nicht-AP-MLD und der ersten AP-MLD verbunden ist; und
falls die provisorische Zuordnung mit mehreren Verknüpfungen zwischen der Nicht-AP-MLD (300) und der einen oder den mehreren zweiten AP-MLDs (200) erfolgreich ist, Senden (S105), durch die Nicht-AP-MLD, von Angabeinformationen an eine Ziel-AP-MLD (200), wobei die Angabeinformationen zum Auslösen der Ziel-AP-MLD verwendet werden, in einem Verteilungssystem eine STA-AP-Abbildungsbeziehung von einer Zuordnung zwischen der Nicht-AP-MLD und der ersten AP-MLD (100) auf eine Zuordnung zwischen der Nicht-AP-MLD und der Ziel-AP-MLD zu aktualisieren, und die Ziel-AP-MLD eine zweite AP-MLD ist, die aus der einen oder den mehreren zweiten AP-MLDs bestimmt wird; und
wobei der Zuordnungsanforderungsrahmen mit mehreren Verknüpfungen einen Verknüpfungszustand einer nicht übertragenen Verknüpfung zwischen der Nicht-AP-MLD (300) und der zweiten AP-MLD umfasst und wobei sich die nicht übertragene Verknüpfung von einer Verknüpfung unterscheidet, auf welcher der Zuordnungsanforderungsrahmen mit mehreren Verknüpfungen ausgetauscht wird.

2. Provisorisches Zuordnungsverfahren mit mehreren Verknüpfungen, umfassend:
Empfangen (S101), durch eine Zielzugriffspunktvorrichtung mit mehreren Verknüpfungen, Ziel-AP-MLD (200), eines Zuordnungsanforderungsrahmens mit mehreren Verknüpfungen von einer Nicht-AP-MLD (300), wobei der Zuordnungsanforderungsrahmen mit mehreren Verknüpfungen zum Auffordern der Nicht-AP-MLD verwendet wird, eine provisorische Zuordnung mit mehreren Verknüpfungen mit der Ziel-AP-MLD durchzuführen; und
falls die provisorische Zuordnung mit mehreren Verknüpfungen zwischen der Ziel-AP-MLD (200) und der Nicht-AP-MLD (300) erfolgreich ist, Empfangen (S105), durch die Ziel-AP-MLD, von Angabeinformationen von der Nicht-AP-MLD, wobei die Angabeinformationen zum Auslösen der Ziel-AP-MLD verwendet werden, in einem Verteilungssystem eine STA-AP-Abbildungsbeziehung von einer Zuordnung zwischen der Nicht-AP-MLD und einer ersten AP-MLD (100) auf eine Zuordnung zwischen der Nicht-AP-MLD und der Ziel-AP-MLD zu aktualisieren;
Erzeugen, durch die Ziel-AP-MLD (200), von STA-AP-Abbildungsinformationen, wobei die STA-AP-Abbildungsinformationen angeben, dass die STA-AP-Abbildungsbeziehung von der Zuordnung zwischen der Nicht-AP-MLD (300) und der ersten AP-MLD (100) auf die Zuordnung zwischen der Nicht-AP-MLD und der Ziel-AP-MLD zu aktualisieren ist; und
Senden, durch die Ziel-AP-MLD (200), der STA-AP-Abbildungsinformationen an das Verteilungssystem;
wobei der Zuordnungsanforderungsrahmen mit mehreren Verknüpfungen einen Verknüpfungszustand einer nicht übertragenen Verknüpfung zwischen der Nicht-AP-MLD (300) und der Ziel-AP-MLD umfasst und wobei sich die nicht übertragene Verknüpfung von einer Verknüpfung unterscheidet, auf welcher der Zuordnungsanforderungsrahmen mit mehreren Verknüpfungen ausgetauscht wird.

3. Verfahren nach Anspruch 2, wobei die STA-AP-Abbildungsinformationen eine Dienstzugriffspunktmedienzugriffssteuerungsadresse, SAP-MAC-Adresse, der Nicht-AP-MLD (300) und eine SAP-MAC-Adresse der Ziel-AP-MLD (200) umfassen.

4. Verfahren nach einem der Ansprüche 1 bis 3, wobei die Angabeinformationen in einem A-Steuerungsfeld enthalten sind.

5. Verfahren nach einem der Ansprüche 1 bis 4, wobei die Angabeinformationen in einem Benachrichtigungsrahmen enthalten sind.

6. Verfahren nach einem der Ansprüche 1 und Ansprüche 4 oder 5, wenn abhängig von Anspruch 1, wobei der Zuordnungsanforderungsrahmen mit mehreren Verknüpfungen ferner ein Grundcodefeld umfasst und das Grundcodefeld einen Grund angibt, weshalb ein Zustand einer Verknüpfung zwischen der zweiten STA der Nicht-AP-MLD (300) und der zweiten AP-MLD getrennt ist.

7. Verfahren nach einem der Ansprüche 1 bis 6, wobei der Zuordnungsanforderungsrahmen mit mehreren Verknüpfungen ferner provisorische Zuordnungsangabeinformationen umfasst und die provisorischen Zuordnungsangabeinformationen angeben, ob die provisorische Zuordnung mit mehreren Verknüpfungen durchzuführen ist.

8. Verfahren nach Anspruch 7, wobei der Zuordnungsanforderungsrahmen mit mehreren Verknüpfungen ferner provisorische Zuordnungslebensdauerinformationen umfasst und die provisorischen Zuordnungslebensdauerinformationen eine Lebensdauer der provisorischen Zuordnung mit mehreren Verknüpfungen angeben.

9. Verfahren nach Anspruch 8, wobei die provisorischen Zuordnungsangabeinformationen und die provisorischen Zuordnungslebensdauerinformationen in einem gemeinsamen Informationsfeld eines Aggregationselements mit mehreren Verknüpfungen, MLA-Elements, enthalten sind.

10. Verfahren nach einem von Anspruch 1 und der Ansprüche 4 bis 9, wenn abhängig von Anspruch 1, wobei das Verfahren vor dem Senden, durch eine oder mehrere erste STAs der Nicht-AP-MLD (300), des Zuordnungsanforderungsrahmens mit mehreren Verknüpfungen an eine oder mehrere zweite AP-MLDs (200) ferner Folgendes umfasst:
Senden, durch die Nicht-AP-MLD (300), von Verknüpfungszustandsinformationen an die erste AP-MLD (100), wobei die Verknüpfungszustandsinformationen angeben, dass der Zustand der Verknüpfung zwischen der einen oder den mehreren STAs der Nicht-AP-MLD (300) und der ersten AP-MLD getrennt ist.

11. Kommunikationsvorrichtung, die dazu konfiguriert ist, das Verfahren nach einem der Ansprüche 1 oder 4 bis 10, wenn abhängig von Anspruch 1, umzusetzen.

12. Kommunikationsvorrichtung, die dazu konfiguriert ist, das Verfahren nach einem der Ansprüche 2-3 oder einem der Ansprüche 4-5 oder 7-9, wenn abhängig von Anspruch 2, umzusetzen.

13. Computerprogramm, wobei, wenn das Computerprogramm durch die Kommunikationsvorrichtung nach Anspruch 11 ausgeführt wird, das Verfahren nach einem der Ansprüche 1 oder 4 bis 10, wenn abhängig von Anspruch 1, umgesetzt wird.

14. Computerprogramm, wobei, wenn das Computerprogramm durch die Kommunikationsvorrichtung nach Anspruch 12 ausgeführt wird, das Verfahren nach einem der Ansprüche 2-3 oder einem der Ansprüche 4-5 oder 7-9, wenn abhängig von Anspruch 2, umgesetzt wird.

15. Computerlesbares Speichermedium, welches das Computerprogramm nach Anspruch 13 oder das Computerprogramm nach Anspruch 14 speichert.

## Revendications

1. Procédé d'association provisoire à liaisons multiples, comprenant :
la génération par un dispositif à liaisons multiples, MLD, non point d'accès, non AP (300), d'une trame de requête d'association à liaisons multiples ;
l'envoi (S101), par une ou plusieurs premières STA du MLD non-AP (300), de la trame de requête d'association à liaisons multiples à un ou plusieurs seconds MLD AP (200), dans lequel la trame de requête d'association à liaisons multiples est utilisée pour demander au MLD non-AP d'effectuer une association provisoire à liaisons multiples avec les un ou plusieurs seconds MLD AP, et pour chacune des une ou plusieurs premières STA, un état d'une liaison entre la première STA respective et un premier MLD AP (100) est déconnecté, et un état d'une liaison entre une seconde STA du MLD non-AP et le premier MLD AP est connecté ; et
si l'association provisoire à liaisons multiples entre le MLD non-AP (300) et les un ou plusieurs seconds MLD AP (200) réussit,
l'envoi (S105), par le MLD non-AP, d'informations d'indication à un MLD AP cible (200), dans lequel les informations d'indication sont utilisées pour déclencher la mise à jour, par le MLD AP cible, dans un système de distribution, d'une relation de mappage STA-AP, d'une association entre le MLD non-AP et le premier MLD AP (100) vers une association entre le MLD non-AP et le MLD AP cible, et le MLD AP cible est un second MLD AP déterminé à partir des uns ou plusieurs seconds MLD AP ; et
dans lequel la trame de requête d'association à liaisons multiples comprend un état de liaison d'une liaison non transmise entre le MLD non-AP (300) et le second MLD AP et dans lequel ladite liaison non transmise est différente d'une liaison sur laquelle la trame de requête d'association à liaisons multiples est échangée.

2. Procédé d'association provisoire à liaisons multiples, comprenant :
la réception (S101), par un dispositif à liaisons multiples, MLD, à point d'accès, AP, cible (200), d'une trame de requête d'association à liaisons multiples provenant d'un MLD non-AP (300), dans lequel la trame de requête d'association à liaisons multiples est utilisée pour demander au MLD non-AP d'effectuer une association à liaisons multiples provisoire avec le MLD AP cible ; et
si l'association provisoire à liaisons multiples entre le MLD AP cible (200) et le MLD non-AP (300) réussit, la réception (S105), par le MLD AP cible, d'informations d'indication provenant du MLD non-AP, dans lequel les informations d'indication sont utilisées pour déclencher la mise à jour, par le MLD AP cible, dans un système de distribution, d'une relation de mappage STA-AP, passant d'une association entre le MLD non-AP et un premier MLD AP (100) à une association entre le MLD non-AP et le MLD AP cible ;
la génération, par le MLD AP (200) cible, d'informations de mappage STA-AP, dans lequel les informations de mappage STA-AP indiquent que la relation de mappage STA-AP doit être mise à jour, passant de l'association entre le MLD non-AP (300) et le premier MLD AP (100) à l'association entre le MLD non-AP et le MLD AP cible ; et
l'envoi, par le MLD AP cible (200), des informations de mappage STA-AP au système de distribution ;
dans lequel la trame de requête d'association à liaisons multiples comprend un état de liaison d'une liaison non transmise entre le MLD non-AP (300) et le MLD AP cible et dans lequel ladite liaison non transmise est différente d'une liaison sur laquelle la trame de requête d'association à liaisons multiples est échangée.

3. Procédé selon la revendication 2, dans lequel les informations de mappage STA-AP comprennent une adresse de contrôle d'accès au support, MAC, du point d'accès de service, SAP, du MLD non-AP (300) et une adresse MAC SAP du MLD AP cible (200).

4. Procédé selon l'une quelconque des revendications 1 à 3, dans lequel les informations d'indication sont transportées dans un champ de commande A.

5. Procédé selon l'une quelconque des revendications 1 à 4, dans lequel les informations d'indication sont transportées dans une trame de notification.

6. Procédé selon l'une quelconque des revendications 1 et 4 ou 5 lorsqu'il dépend de la revendication 1, dans lequel la trame de requête d'association à liaisons multiples comprend en outre un champ de code de motif, et le champ de code de motif indique la raison pour laquelle l'état d'une liaison entre la seconde STA du MLD non-AP (300) et le second MLD AP est déconnecté.

7. Procédé selon l'une quelconque des revendications 1 à 6, dans lequel la trame de requête d'association à liaisons multiples comprend en outre des informations d'indication sur l'association provisoire, et les informations d'indication sur l'association provisoire indiquent s'il convient d'effectuer une association provisoire à liaisons multiples.

8. Procédé selon la revendication 7, dans lequel la trame de requête d'association à liaisons multiples comprend en outre des informations sur la durée de vie de l'association provisoire, et les informations sur la durée de vie de l'association provisoire indiquent une durée de vie de l'association provisoire à liaisons multiples.

9. Procédé selon la revendication 8, dans lequel les informations d'indication sur l'association provisoire et les informations sur la durée de vie de l'association provisoire sont transportées dans un champ d'information commun d'un élément d'agrégation à liaisons multiples, MLA.

10. Procédé selon l'une quelconque des revendications 1 et 4 à 9 lorsqu'elles dépendent de la revendication 1, dans lequel, avant l'envoi, par une ou plusieurs premières STA du MLD non-AP (300), de la trame de requête d'association à liaisons multiples à un ou plusieurs seconds MLD AP (200), le procédé comprend en outre : l'envoi, par le MLD non-AP (300), d'informations d'indication sur l'état de liaison au premier MLD AP (100), dans lequel les informations d'indication sur l'état de liaison indiquent que l'état de la liaison entre les une ou plusieurs premières STA du MLD non-AP (300) et le premier MLD AP est déconnecté.

11. Appareil de communication, configuré pour mettre en œuvre le procédé selon l'une quelconque des revendications 1, ou 4 à 10 lorsqu'elles dépendent de la revendication 1.

12. Appareil de communication, configuré pour mettre en œuvre le procédé selon l'une quelconque des revendications 2 à 3 ou selon l'une quelconque des revendications 4 à 5 ou 7 à 9 lorsqu'elles dépendent de la revendication 2.

13. Programme informatique, dans lequel lorsque le programme informatique est exécuté par l'appareil de communication de la revendication 11, le procédé selon l'une quelconque des revendications 1, ou 4 à 10 lorsqu'elles dépendent de la revendication 1 est mis en œuvre.

14. Programme informatique, dans lequel lorsque le programme informatique est exécuté par l'appareil de communication de la revendication 12, le procédé selon l'une quelconque des revendications 2 à 3 ou l'une quelconque des revendications 4 à 5 ou 7 à 9 lorsqu'elles dépendent de la revendication 2 est mis en œuvre.

15. Support de stockage lisible par ordinateur contenant le programme informatique de la revendication 13 ou le programme informatique de la revendication 14.
